# FASCICULE DE BREVET EUROPEEN

(11) **EP 2 771 716 B1**
(45) Date de publication et mention de la délivrance du brevet: **08.05.2019**
(21) Numéro de dépôt: 12775528.8
(22) Date de dépôt: 24.10.2012
(51) Int. Cl.: G01T 1/02

(54) **PROCEDE DE DETERMINATION DE LA DOSE D'IRRADIATION DEPOSEE DANS UN SCINTILLATEUR PAR UN RAYONNEMENT IONISANT ET DISPOSITIF ASSOCIE**
VERFAHREN ZUR BESTIMMUNG DER BELEUCHTUNGSDOSIS IN EINEM SZINTILLATOR DURCH IONISIERENDE STRAHLUNG UND ZUGEHÖRIGE VORRICHTUNG
METHOD FOR DETERMINING THE IRRADIATION DOSE DEPOSITED IN A SCINTILLATOR BY IONISING RADIATION AND ASSOCIATED DEVICE

(30) Priorité: 24.10.2011 FR 1159615
(43) Date de publication de la demande: 03.09.2014
(73) Titulaire: Centre National de la Recherche Scientifique (C.N.R.S.), 75016 Paris (FR); Université de Strasbourg, 67000 Strasbourg (FR)
(72) Inventeur: JUNG, Jean-Marc, 67270 Gougenheim (FR); SOHIER, Till, 67300 Schiltighem (FR); TORRES, Mauricio, 67100 Strasbourg (FR); MUNIER, Mélodie, 67205 Oberhausbergen (FR); BARILLON, Rémi, 67520 Marlenheim (FR)
(74) Mandataire: IP Trust
(86) Numéro de dépôt international: PCT/EP2012/071085
(87) Numéro de publication internationale: WO 2013/060745

(56) Documents cités:
- WO-A2-2010/017218
- JP-A- 57 034 474
- Till Sohier: "Nouvelle approche de la dosimétrie des rayonnements ionisants par mesure de fluorescence, selon la technique du comptage de photon unique, corrélé en temps, à l'échelle nanoseconde", PhD Thesis , 9 mars 2012 (2012-03-09), XP002689696, Extrait de l'Internet: URL:http://tel.archives-ouvertes.fr/docs/0 0/67/77/32/PDF/these.pdf [extrait le 2013-01-03]
- COLLOMB-PATTON V ET AL: "The DOSIMAP, a high spatial resolution tissue equivalent 2D dosimeter for LINAC QA and IMRT verification", MEDICAL PHYSICS, AIP, MELVILLE, NY, US, vol. 36, no. 2, 7 janvier 2009 (2009-01-07), pages 317-328, XP012129851, ISSN: 0094-2405, DOI: 10.1118/1.3013703

## Description

La présente invention concerne un procédé de détermination d'une dose d'irradiation déposée dans un scintillateur par un rayonnement ionisant.

Dans un grand nombre de domaines (médecine, industrie pharmaceutique, industrie agro-alimentaire, industrie nucléaire, scintillation liquide), il est important de pouvoir déterminer de manière précise la dose d'irradiation reçue par un objet ou un organisme vivant soumis à un rayonnement ionisant.

Le procédé le plus répandu de détermination de la dose déposée dans un matériau fait appel à une chambre d'ionisation. La chambre d'ionisation comprend une enceinte remplie d'un volume de gaz. Une anode et une cathode sont disposées respectivement aux extrémités de l'enceinte et une différence de potentiel électrique est appliquée entre l'anode et la cathode de manière à créer un champ électrique dans le gaz. Le rayonnement ionisant incident dans la chambre d'ionisation ionise les atomes ou les molécules du gaz, créant ainsi des paires de porteurs de charges, électrons et trous. Sous l'effet du champ électrique existant dans le gaz, les porteurs positifs (ions) migrent vers la cathode, tandis que les porteurs négatifs (électrons) migrent vers l'anode. Les premiers, plus lourds et moins mobiles, sont généralement négligés. Il en résulte un courant électrique proportionnel au nombre de paires de porteurs de charge créées dans le gaz par le rayonnement ionisant. Une correction tenant compte de la différence de densité entre le gaz de la chambre d'ionisation et le matériau dans lequel on veut estimer la dose déposée est ensuite appliquée de manière à obtenir la dose corrigée dans le matériau.

Ce procédé ne donne pas entière satisfaction. En premier lieu, il est limité à la mesure des doses moyennes et fortes en raison de la difficulté de mesurer précisément des courants d'intensité inférieure au picoampère. Par conséquent, la mesure de doses faibles, quand elle est possible, reste entachée de grandes incertitudes.

En outre, le courant mesuré est proportionnel au nombre de paires de porteurs de charge créées dans le gaz de la chambre d'ionisation. Pour obtenir la dose déposée dans le matériau, il est nécessaire d'appliquer aux mesures issues de la chambre d'ionisation des corrections tenant compte de la différence de densité entre le gaz et le matériau. L'application de tels facteurs de correction, intégrant parfois des corrections géométriques, diminue la précision de la mesure.

Enfin, les chambres d'ionisation les plus petites mesurent environ 2 cm de côté. Elles sont donc relativement encombrantes, ce qui empêche de les utiliser dans des lieux exigus.

Un deuxième procédé de détermination de la dose déposée consiste à utiliser un scintillateur associé à un tube photomultiplicateur. Sous l'effet du rayonnement ionisant incident, le scintillateur est excité et émet de la lumière. Cette lumière résulte de deux contributions : i) l'excitation directe du scintillateur, sans ionisation, conduisant à une émission de lumière dite prompte ; ii) l'ionisation du scintillateur et la production de paires de porteurs de charges, selon un processus semblable à celui induit dans une chambre d'ionisation classique, donnant naissance à une fluorescence dite de recombinaison, différée par rapport à la fluorescence prompte. La lumière totale émise par le scintillateur est reçue par le tube photomultiplicateur, qui la convertit en un signal électrique. Un montage électronique, placé en aval du tube photomultiplicateur, identifie qu'un évènement d'excitation s'est produit dans le scintillateur à chaque fois que la tension en sortie du tube photomultiplicateur dépasse un seuil prédéterminé de déclenchement. Un abaque donne ensuite la correspondance entre la dose déposée dans le matériau par le rayonnement ionisant et le nombre d'événements comptés par le photomultiplicateur.

La nécessité de recourir à un abaque provient du fait que le nombre d' « évènements d'excitation » identifiés par le montage électronique associé au tube photomultiplicateur ne correspond pas au nombre d'événements d'excitation se produisant réellement dans le scintillateur, notamment en raison du bruit intrinsèque au tube photomultiplicateur, ainsi que du rayonnement Cherenkov pouvant se produire dans le scintillateur suite à son excitation, dans le cas de rayonnements ayant une énergie suffisante pour en produire. Ainsi, l'abaque est une courbe non linéaire de correspondance entre la dose déposée dans le matériau et la scintillation détectée, la non-linéarité provenant notamment de l'augmentation du bruit du détecteur avec l'intensité de la lumière reçue et du rayonnement Cherenkov.

Du fait de la nécessité d'utiliser une courbe non linéaire de correspondance pour déterminer la dose à partir de la scintillation détectée, ce procédé ne permet pas une détermination directe de la dose déposée dans le matériau à partir du signal détecté par le tube photomultiplicateur au moyen d'une relation linéaire entre la dose déposée et le signal mesuré.

En outre, l'abaque est propre à un détecteur particulier. En particulier, l'abaque est différent pour différents modèles de photomultiplicateurs, mais également pour deux photomultiplicateurs de même modèle. L'abaque varie si l'on change le photomultiplicateur, même si l'on choisit un modèle neuf de même référence.

WO 2010/017218 décrit un appareil et un procédé de mesure d'un rayonnement ionisant.

Un but de l'invention est de fournir un procédé direct et précis de détermination de la dose d'irradiation déposée dans un matériau par un rayonnement ionisant, même si cette dose est très faible.

A cet effet, l'invention a pour objet un procédé du type précité, selon la revendication 1, comprenant les étapes de :
- irradier le scintillateur au moyen du rayonnement ionisant pendant un temps prédéterminé, chaque interaction entre le rayonnement ionisant et le scintillateur excitant le scintillateur et engendrant l'émission de photons de scintillation ;
- détecter un instant d'excitation du scintillateur par le rayonnement ionisant à l'aide d'un premier photodétecteur ; puis
- détecter un instant de réception d'un photon de scintillation émis par le scintillateur à l'aide d'un deuxième photodétecteur, fonctionnant en régime de comptage de photon unique, distinct du premier photodétecteur ;
- identifier chaque séquence constituée par une détection d'un instant d'excitation par le premier photodétecteur, suivie par une détection d'un instant de réception par le deuxième photodétecteur à un évènement de coïncidence ;
- compter le nombre d'événements de coïncidence détectés pendant le temps prédéterminé d'irradiation ; et
- obtenir la dose d'irradiation déposée dans le scintillateur pendant le temps prédéterminé d'irradiation en fonction du nombre d'événements de coïncidence comptés et d'un facteur de proportionnalité prédéterminé.

Selon des modes particuliers de réalisation, le procédé présente l'une ou plusieurs des caractéristiques suivantes, prise(s) isolément ou suivant toute combinaison techniquement possible :
- la dose d'irradiation déposée dans le scintillateur pendant le temps prédéterminé d'irradiation est obtenue par multiplication du nombre d'événements de coïncidence comptés par le facteur de proportionnalité prédéterminé,
- le deuxième photodétecteur présente une ouverture physique de réception de photons d'aire inférieure à une ouverture physique de réception de photons du premier photodétecteur,
- le premier photodétecteur et le deuxième photodétecteur sont choisis parmi un tube photomultiplicateur, un photomultiplicateur à galette de microcanaux et un capteur à diodes,
- le facteur de proportionnalité prédéterminé est indépendant du nombre d'événements de coïncidence détectés,
- le procédé de détermination comprend les étapes de :
   - chronométrer le temps de détection entre l'instant d'excitation détecté par le premier photodétecteur et l'instant de réception d'un photon de scintillation par le deuxième photodétecteur pour chaque évènement de coïncidence ;
   - construire une courbe du nombre d'évènements de coïncidence en fonction du temps de détection;
- calculer la dose déposée sur la base d'une intégration d'au moins une partie de la courbe et du facteur de proportionnalité prédéterminé ;
- la dose déposée est calculée par multiplication de l'intégrale d'au moins une partie de la courbe par le facteur de proportionnalité prédéterminé
- le scintillateur est un scintillateur organique,
- le procédé comprend une étape de transmission d'au moins une partie de la lumière issue du scintillateur vers le premier photodétecteur et le deuxième photodétecteur au moyen d'une fibre optique, et
- le procédé comprend une étape consistant à placer le scintillateur dans une enceinte d'application du rayonnement ionisant à un organisme vivant.

L'invention a également pour objet un dispositif, selon la revendication 10, de détermination de la dose d'irradiation déposée dans un scintillateur par un rayonnement ionisant émis par une source, comprenant :
- un scintillateur configuré pour être irradié par le rayonnement ionisant et propre à émettre des photons de scintillation à chaque interaction avec le rayonnement ionisant ;
- un premier photodétecteur, configuré pour détecter un instant d'excitation du scintillateur, et un deuxième photodétecteur, distinct du premier photodétecteur, propre à fonctionner en régime de comptage de photon unique et configuré pour détecter un instant de réception d'un photon de scintillation émis par le scintillateur,
- des moyens d'identification, configurés pour identifier chaque séquence constituée par une détection d'un instant d'excitation par le premier photodétecteur, suivie par une détection d'un instant de réception d'un photon de scintillation par le deuxième photodétecteur à un évènement de coïncidence ;
- des moyens de comptage, configurés pour compter le nombre d'événements de coïncidence détectés pendant le temps prédéterminé d'irradiation ; et
- des moyens de calcul, configurés pour obtenir la dose d'irradiation déposée dans le scintillateur pendant le temps prédéterminé d'irradiation en fonction du nombre d'événements de coïncidence et d'un facteur de proportionnalité prédéterminé.

Selon une caractéristique particulière du dispositif, le scintillateur est solidaire d'au moins une fibre optique, laquelle est propre à transmettre les photons de scintillation issus du scintillateur vers le premier photodétecteur et le deuxième photodétecteur.

Selon une caractéristique particulière du dispositif :
- les moyens d'identification sont en outre configurés pour chronométrer le temps de détection entre l'instant d'excitation détecté par le premier photodétecteur et l'instant de réception d'un photon de scintillation par le deuxième photodétecteur pour chaque évènement de coïncidence ; et
- les moyens de calcul sont en outre configurés pour construire une courbe du nombre d'événements de coïncidence en fonction du temps de détection et pour calculer la dose sur la base d'une intégration d'au moins une partie de la courbe et d'un facteur de proportionnalité prédéterminé.

Le procédé selon l'invention peut également comprendre les étapes de:
- calculer l'intégrale de la courbe du nombre d'événements de coïncidence détectés en fonction du temps de détection, entre un temps de détection égal à n x τ, où n est une constante comprise entre 1 et 10, avantageusement environ égale à 1, et τ est la durée de vie de fluorescence du scintillateur, et un temps de détection maximal, pour obtenir un nombre total d'événements de coïncidence d'ionisation ; et
- déterminer la dose d'ionisation déposée dans le scintillateur en multipliant le nombre total d'événements de coïncidence d'ionisation par un deuxième facteur de proportionnalité prédéterminé.

Enfin, le procédé selon l'invention peut également comprendre les étapes de:
- calculer l'intégrale de la courbe du nombre d'événements de coïncidence détectés en fonction du temps de détection, entre un temps de détection minimal et un temps de détection égal à n x τ, où n est une constante comprise entre 1 et 10, avantageusement environ égale à 1, et τ est la durée de vie de fluorescence du scintillateur, pour obtenir un nombre total d'événements de coïncidence d'excitation ; et pour
- déterminer une dose d'excitation déposée dans le scintillateur en multipliant le nombre total d'événements de coïncidence d'excitation par un troisième facteur de proportionnalité prédéterminé.

Le dispositif selon l'invention peut aussi comprendre des moyens de calcul en outre configurés pour:
- calculer l'intégrale de la courbe du nombre d'événements de coïncidence détectés en fonction du temps de détection, entre un temps de détection égal à n x τ, où n est une constante comprise entre 1 et 10, avantageusement environ égale à 1, et est la durée de vie de fluorescence du scintillateur, et un temps de détection maximal, pour obtenir un nombre total d'événements de coïncidence d'ionisation ; et
- déterminer une dose d'ionisation déposée dans le scintillateur en multipliant le nombre total d'événements de coïncidence d'ionisation par un troisième facteur de proportionnalité prédéterminé.

Enfin, selon l'invention les moyens de calcul peuvent être configurés pour:
- calculer l'intégrale de la courbe du nombre d'événements de coïncidence détectés en fonction du temps de détection, entre un temps de détection minimal et un temps de détection Δτ égal à n x τ, où n est une constante comprise entre 1 et 10, avantageusement environ égale à 1, et τ est la durée de vie de fluorescence du scintillateur, pour obtenir un nombre total d'événements de coïncidence d'excitation ; et pour
- déterminer une dose d'excitation déposée dans le scintillateur en multipliant le nombre total d'événements de coïncidence d'excitation par un troisième facteur de proportionnalité prédéterminé.

L'invention sera mieux comprise à la lecture de la description qui va suivre, donnée uniquement à titre d'exemple et faite en se référant aux dessins annexés, sur lesquels :
- la figure 1 est une illustration schématique d'un dispositif de détermination de la dose selon un premier mode de réalisation ;
- la figure 2 est une représentation schématique d'un procédé de détermination de la dose selon un premier mode de réalisation ;
- la figure 3 est un graphique représentant des courbes de la dose déposée en fonction de la distance à la source de rayonnement ionisant, obtenues respectivement par le procédé de détermination selon l'invention et par un procédé classique mettant en oeuvre une chambre d'ionisation ;
- la figure 4 est un graphique représentant des courbes obtenues par le dispositif de détermination de la dose selon un deuxième mode de réalisation à différentes distances de la source de rayonnement ionisant ;
- la figure 5 est une représentation schématique d'une partie d'un dispositif de détermination de la dose selon un troisième mode de réalisation ; et
- les figures 6 à 9 sont des graphiques représentant des courbes obtenues avec le dispositif de détermination de la dose selon l'invention ; et
- la figure 10 est un graphique représentant le nombre d'événements de coïncidence détectés par le dispositif de détermination en fonction du temps de détection.

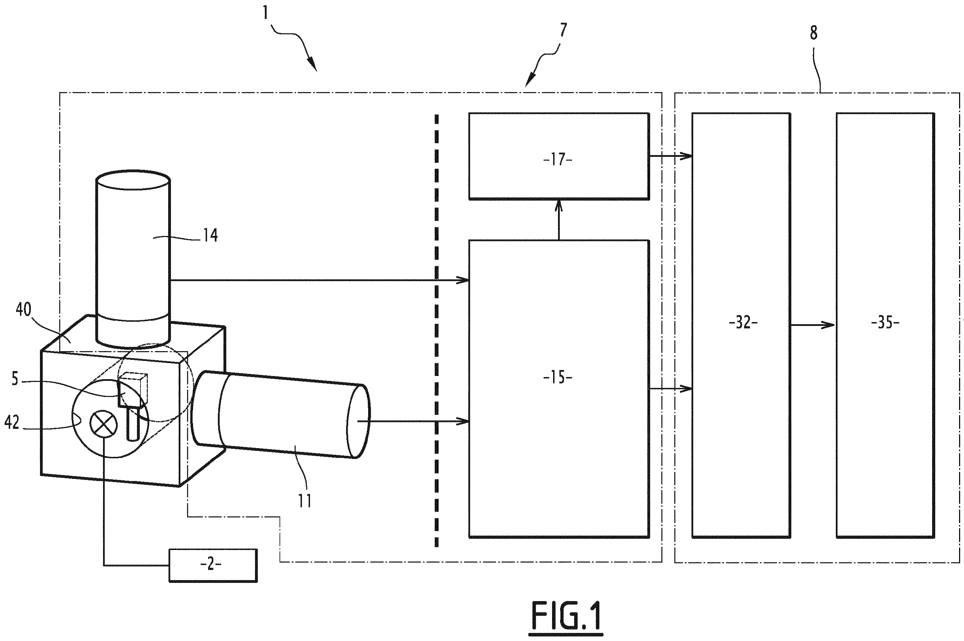

On a illustré sur la figure 1 le dispositif de détermination 1 de la dose d'irradiation déposée dans un scintillateur par un rayonnement ionisant selon un premier mode de réalisation. Ce dispositif de détermination 1 comprend :
- une source 2 propre à émettre un rayonnement ionisant ;
- un scintillateur 5 configuré pour être irradié par le rayonnement ionisant issu de la source 2 pendant un temps prédéterminé d'irradiation et propre à émettre des photons de scintillation à chacune de ses interactions avec le rayonnement ionisant ;
- un dispositif d'acquisition 7, configuré pour détecter des photons de scintillation émis par le scintillateur 5 ; et
- un dispositif d'analyse 8, configuré pour déterminer la dose déposée dans le scintillateur 5 à partir des photons de scintillation détectés par le dispositif d'acquisition 7.

Le rayonnement ionisant est un rayonnement de type particulaire ou un rayonnement de type électromagnétique (photons), tel qu'un rayonnement gamma ou un rayonnement X. Dans le cas d'un rayonnement particulaire, les particules sont des particules chargées, en particulier des électrons, des protons, des particules alpha ou des ions ou des particules non chargées, notamment des neutrons, par exemple des neutrons produisant des particules chargées dans le scintillateur par réaction nucléaire (n,p). Les électrons secondaires, issus des interactions primaires ionisantes des rayonnements cités plus haut avec le scintillateur, sont également détectés.

La source 2 est toute source adaptée pour émettre un rayonnement ionisant tel que défini ci-dessus. La source 2 est par exemple un accélérateur de particules, un radionucléide artificiel ou naturel, un composant d'une installation nucléaire, tel qu'un réacteur nucléaire, un déchet nucléaire, un matériau fissile destiné à une application civile ou militaire, un générateur de rayons X médical, notamment un appareil d'imagerie ou un générateur de rayons X de recherche, tel qu'un synchrotron. Dans le mode de réalisation représenté, la source 2 est configurée pour émettre un faisceau de rayonnement ionisant directionnel ou collimaté. En variante, la source 2 est propre à émettre un rayonnement ionisant à 4 pi stéradian.

Le scintillateur 5 est un scintillateur organique, notamment un scintillateur plastique. Il s'agit par exemple d'un scintillateur de type BC-418 vendu par la société Bicron. En variante, le scintillateur est un scintillateur organique à base d'oxazoles ou d'oxadiazoles purs ou dilués dans une matrice transparente, un scintillateur organique obtenu par synthèse chimique sur lequel ont été greffés des chromophores oxazoles ou oxadiazoles,de taille microscopique ou nanométrique. Selon une autre variante, le scintillateur est réalisé dans un matériau scintillant inorganique, tel que l'iodure de sodium (Nal), le tellurure de cadmium (CdTe), le monoxyde de titane (TiO), et le grenat d'yttrium et d'aluminium dopé au cérium (YaG).

Le scintillateur 5 se présente par exemple sous la forme d'un film d'un centimètre carré de surface et de 10 micromètres d'épaisseur. Néanmoins, toutes les tailles, épaisseurs et géométries sont compatibles avec l'invention, allant de fibres optiques scintillantes de très faibles diamètres à des éléments de très grandes tailles (plaques de plusieurs mètres), en passant par les poudres, les solutions diluées solides ou liquides.

Le scintillateur 5 est choisi de manière à émettre de la lumière de longueur d'onde comprise dans le domaine de longueurs d'onde auxquelles le dispositif d'acquisition 7 est sensible. Le scintillateur 5 émet par exemple dans l'ultraviolet. En variante, le scintillateur 5 comprend tout type de chromophore et émet une lumière dont la longueur d'onde est égale à la longueur d'onde d'émission de ce chromophore. Dans ce cas, le dispositif d'acquisition 7 et en particulier les photodétecteurs présentent une sensibilité en adéquation avec la longueur d'onde d'émission du chromophore.

Dans la suite de la description, on appelle « événement d'excitation » une interaction entre le rayonnement ionisant incident et le scintillateur 5. Chaque évènement d'excitation engendre l'émission de photons de scintillation par le scintillateur 5. L'émission de photons de scintillation, à l'occasion d'un évènement d'excitation, se traduit par une réponse lumineuse de courte durée. Pour certains scintillateurs, cette réponse lumineuse correspond à un flash lumineux de durée inférieure à 1 microseconde. Le nombre de photons émis par le scintillateur 5 par unité de temps au cours de ce flash lumineux suit une courbe de déclin de scintillation. La forme de cette courbe de déclin de scintillation n'est pas caractéristique d'un scintillateur particulier, mais est commune à tous les scintillateurs.

Le dispositif d'acquisition 7 comprend un premier photodétecteur 11, un deuxième photodétecteur 14, distinct du premier photodétecteur 11 et des moyens d'identification 15 d'un évènement de coïncidence.

Le premier et le deuxième photodétecteur 11, 14 sont par exemple des tubes photomultiplicateurs. En variante, il s'agit de photomultiplicateurs à galettes de microcanaux ou de détecteurs à diodes du type CCD. Le deuxième photodétecteur 14 est en particulier formé par tout dispositif détecteur de lumière capable de fonctionner en régime de comptage de photon unique.

Le premier photodétecteur 11 est configuré pour détecter un instant d'excitation du scintillateur 5 correspondant à un évènement d'excitation. A cet effet, il est configuré pour détecter toute émission de photons de scintillation par le scintillateur 5, et en particulier l'émission d'un premier photon de scintillation résultant d'un évènement d'excitation. L'instant de détection du premier photon de scintillation est identifié à l'instant d'excitation du scintillateur 5. Le premier photodétecteur 11 est en outre configuré pour émettre un signal de détection de ce premier photon de scintillation. Le premier photodétecteur 11 est utilisé à pleine ouverture optique de sa fenêtre d'entrée. Ainsi, il n'est pas diaphragmé. La probabilité de détection, par ce photodétecteur 11, des premiers photons émis par le scintillateur 5 (temps court) est ainsi augmentée.

Le deuxième photodétecteur 14 est configuré de façon à ne détecter qu'un unique photon pour chaque évènement d'excitation se produisant dans le scintillateur 5. Il fonctionne donc en régime de comptage de photon unique. Il est optiquement moins ouvert aux photons de scintillation que le premier photodétecteur 11. En particulier, un diaphragme est placé en amont de la fenêtre d'entrée du deuxième photodétecteur 14 de manière à délimiter une ouverture d'entrée des photons de scintillation dont l'aire est choisie de manière à ce que ce deuxième photodétecteur ne reçoive qu'un unique photon de scintillation, dans sa direction d'observation, pour chaque instant d'excitation détecté par le photodétecteur 11. Le deuxième photodétecteur 14 est propre à émettre un signal de détection du photon de scintillation.

L'aire de l'ouverture d'entrée du deuxième photodétecteur 14 est inférieure, notamment très inférieure à l'aire de l'ouverture d'entrée du premier photodétecteur 11. En particulier, l'aire de l'ouverture d'entrée du deuxième photodétecteur 14 est inférieure à 5% de l'aire de l'ouverture d'entrée du premier photodétecteur 11.

Les moyens d'identification 15 sont configurés pour recevoir successivement dans une première étape, un signal de détection provenant du premier photodétecteur 11, traduisant la détection d'un premier photon de scintillation résultant d'un évènement d'excitation dans le scintillateur 5, puis dans une deuxième étape, postérieure à la première étape, un signal de détection provenant du deuxième photodétecteur 14 traduisant la réception d'un photon de scintillation par le deuxième photodétecteur 14. Il est en outre propre à identifier chaque séquence constituée de la réception d'un signal de détection provenant du premier photodétecteur 11 et de la réception d'un signal de détection provenant du deuxième photodétecteur 14 à un évènement de coïncidence.

Ainsi, une fois un premier photon détecté par le premier photodétecteur 11, les moyens d'identification 15 sont configurés pour attendre la détection d'un photon de scintillation par le deuxième photodétecteur 14, sans tenir compte des détections éventuelles de photons par le premier photodétecteur 11.

Une fois le photon de scintillation détecté par le deuxième photodétecteur 14, les moyens d'identification 15 sont configurés pour attendre la détection d'un photon de scintillation par le premier photodétecteur 11 sans tenir compte des photons éventuellement détectés par le second photodétecteur 14.

Les moyens d'identification 15 sont configurés pour déclencher un chronomètre 17 lorsqu'ils reçoivent un signal de détection en provenance du premier photodétecteur 11, puis pour arrêter le chronomètre 17 lorsqu'ils reçoivent le signal de détection suivant en provenance du deuxième photodétecteur 14. L'instant de déclenchement du chronomètre 17 correspond ainsi sensiblement à l'instant d'excitation du scintillateur 5 lors de l'événement d'excitation considéré. En particulier, l'instant de déclenchement correspond à l'instant d'excitation du scintillateur 5 avec une incertitude temporelle inférieure ou égale à la nanoseconde. Le chronomètre 17 est propre à chronométrer, pour chaque évènement de coïncidence, le temps de détection Δt écoulé entre l'instant d'excitation du scintillateur 5 et l'instant de réception d'un photon de scintillation par le deuxième photodétecteur 14.

Les moyens d'identification 15 comprennent par exemple un convertisseur temps-amplitude configuré pour recevoir le signal de détection du premier photodétecteur 11 et le signal de détection du deuxième photodétecteur 14, et pour fournir une impulsion de sortie dont l'amplitude est proportionnelle au temps écoulé entre l'instant d'excitation détecté par le premier photodétecteur 11 et l'instant de réception du photon de scintillation par le deuxième photodétecteur 14. De manière classique, des premier et deuxième discriminateurs sont interposés respectivement entre la sortie des premier et deuxième photodétecteurs 11, 14 et le convertisseur temps-amplitude. Les premier et deuxième discriminateurs sont configurés pour éliminer, par la mise en place de seuils de tension réglables, les signaux de très faibles amplitudes issus des photodétecteurs 11, 14 qui peuvent être interprétés comme des bruits et pour délivrer, après réception des signaux non standard issus des photodétecteurs 11, 14, des signaux électriques standard aux entrées du convertisseur temps-amplitude.

Le dispositif d'analyse 8 comprend :
- des moyens de comptage 32, configurés pour compter le nombre d'événements de coïncidence identifiés par les moyens d'identification 15 pendant un temps prédéterminé d'irradiation ; et
- des moyens de calcul 35, configurés pour obtenir la dose d'irradiation déposée dans le scintillateur 5 sur la base du nombre d'événements de coïncidence comptés par les moyens de comptage 32 et d'un facteur de proportionnalité prédéterminé.

Les moyens de comptage 32 sont propres à compter le nombre d'événements de coïncidence détectés par le dispositif de détermination 1 pendant le temps d'irradiation prédéterminé par incrémentation d'un compteur traduisant le nombre d'événements de coïncidence détectés.

En particulier, les moyens de comptage 32 comprennent des moyens de construction d'un histogramme, configurés pour construire un histogramme des temps écoulés entre l'excitation du scintillateur 5 vue par le premier photodétecteur 11 et l'émission de scintillation vue par le deuxième photodétecteur 14. Pour chaque évènement de coïncidence identifié par les moyens d'identification 15, ils sont propres à incrémenter d'une unité la colonne de cet histogramme correspondant au temps de détection mesuré par le chronomètre 17 pour cet évènement de coïncidence. A l'issue du temps prédéterminé d'irradiation, le contenu de chaque colonne de l'histogramme correspond au nombre d'événements de coïncidence correspondant à un même temps de détection. L'histogramme obtenu correspond en outre à l'exacte mesure, en résolution temporelle nanoseconde, de l'intensité de scintillation émise par le scintillateur 5 au cours du temps.

Dans le dispositif de détermination 1 selon le premier mode de réalisation, les moyens de comptage 32 sont propres à sommer les contenus de chaque colonne de l'histogramme pour obtenir le nombre total d'événements de coïncidence détectés pendant le temps prédéterminé d'irradiation.

Les moyens de comptage 32 comprennent par exemple un analyseur multicanal connecté à la sortie du convertisseur temps-amplitude. L'analyseur multicanal est propre à incrémenter d'une unité le contenu de la mémoire du canal dont le numéro est proportionnel à l'amplitude de l'impulsion fournie par le convertisseur temps-amplitude.

Dans le premier mode de réalisation, les moyens de calcul 35 sont configurés pour calculer la dose d'irradiation déposée dans le scintillateur 5 par multiplication du nombre total d'événements de coïncidence comptés, ou intégrale de l'histogramme obtenu, par les moyens de comptage 32 pendant le temps d'irradiation prédéterminé par un facteur de proportionnalité prédéterminé.

Le facteur de proportionnalité prédéterminé est par exemple enregistré dans une mémoire du dispositif d'analyse 8. Il dépend uniquement des caractéristiques du dispositif d'acquisition 7, du dispositif d'analyse 8 et du scintillateur 5, c'est-à-dire des caractéristiques de la chaîne d'acquisition. Il est indépendant de la distance du scintillateur 5 à la source 2, des caractéristiques du rayonnement ionisant (type de rayonnement ionisant, énergie du rayonnement ionisant, fluence etc.).

Le facteur de proportionnalité est, par exemple, prédéterminé en utilisant une source de rayonnement ionisant 2 de référence pour laquelle la valeur de la dose déposée à la distance d est connue. On détermine ensuite, le nombre total d'événements de coïncidence détectés dans les mêmes conditions à l'aide du dispositif de détermination de la dose selon l'invention. Le rapport entre la dose d'irradiation connue et le nombre total d'événements de coïncidence déterminé correspond au facteur de proportionnalité prédéterminé.

En option, les moyens de calcul 35 sont configurés pour calculer une valeur du débit de dose correspondant en divisant la dose d'irradiation calculée par le temps prédéterminé d'irradiation.

Le scintillateur 5 peut être disposé dans une enceinte 40. Dans l'exemple représenté, l'enceinte 40 présente une forme parallélépipédique, en particulier la forme d'un cube.

L'enceinte 40 est étanche à la lumière, c'est-à-dire qu'elle empêche la lumière provenant de l'extérieur de l'enceinte 40 d'entrer dans l'enceinte 40 et qu'elle empêche également la lumière produite dans l'enceinte 40 de sortir de l'enceinte 40. L'enceinte 40 comprend une fenêtre 42 d'entrée du rayonnement ionisant et une fenêtre de sortie du rayonnement ionisant. Les fenêtres d'entrée 42 et de sortie sont formées dans des faces opposées de l'enceinte 40. Les fenêtres d'entrée 42 et de sortie sont transparentes au rayonnement ionisant, c'est-à-dire qu'elles laissent passer le rayonnement ionisant sans affecter significativement ses caractéristiques. En revanche, elles sont étanches à la lumière. A cet effet, elles sont par exemple revêtues d'un film réalisé dans un matériau opaque à la lumière tout en étant transparent au rayonnement ionisant, tel que l'aluminium. Ce matériau devra être choisi dans une gamme de matériaux métalliques ductiles, par exemple tantale, donc facilement laminables, afin d'obtenir des épaisseurs de fenêtres micrométriques. Il devra également être non scintillant afin de ne pas perturber la mesure. A cet effet, on évitera notamment les matériaux organiques.

La source 2 de rayonnement ionisant est agencée à l'extérieur de l'enceinte 40 en regard de la fenêtre d'entrée 42. Ainsi, le rayonnement ionisant, en particulier le faisceau de rayonnement ionisant, issu de la source 2 est propre à pénétrer dans l'enceinte 40 par la fenêtre d'entrée 42. Après interaction avec le scintillateur 5, le rayonnement ionisant est propre à sortir de l'enceinte 40 par la fenêtre de sortie.

Le premier photodétecteur 11 et le deuxième photodétecteur 14 sont configurés pour détecter des photons de scintillation émis par le scintillateur 5 à l'intérieur de l'enceinte 40. Dans l'exemple représenté, le premier photodétecteur 11 et le deuxième photodétecteur 14 sont disposés au niveau de deux faces adjacentes de l'enceinte 40.

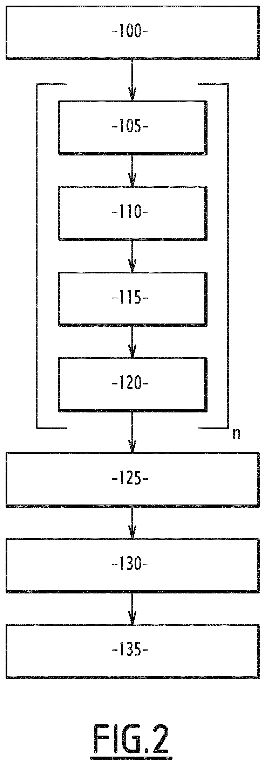

Le procédé de détermination de la dose déposée dans le scintillateur 5 selon un premier mode de réalisation va maintenant être expliqué en référence à la figure 2. Ce procédé met en oeuvre le dispositif de détermination 1 de la dose déposée. Il fait appel à la technique de comptage de photons uniques corrélés en temps (encore appelée « time correlated single photon counting » en anglais).

Dans une étape 100, on irradie pendant un temps prédéterminé d'irradiation le scintillateur 5 au moyen du rayonnement ionisant émis par la source 2.

Dans une étape 105, le premier photodétecteur 11 détecte un premier photon de scintillation et émet un signal de détection de ce photon. L'instant auquel le premier photodétecteur 11 a détecté le premier photon de scintillation est identifié à un instant d'excitation du scintillateur 5 résultant d'une interaction entre le rayonnement ionisant et le scintillateur. Les moyens d'identification 15 reçoivent le signal de détection provenant du premier photodétecteur 11. Ils déclenchent le chronomètre 17. Le chronomètre 17 compte alors le temps écoulé à partir de l'instant t₁ d'excitation du scintillateur 5.

Ensuite, dans une étape 110, le deuxième photodétecteur 14 détecte un photon de scintillation à un instant t₂ et émet un signal de détection de ce photon de scintillation. Les moyens d'identification 15 reçoivent le signal de détection provenant du deuxième photodétecteur 14. La réception du signal de détection provenant du deuxième photodétecteur 14 engendre l'arrêt du chronomètre 17. Le chronomètre 17 a ainsi mesuré le temps de détection écoulé entre l'instant t₁ d'excitation du scintillateur 5 et l'instant t₂ de détection du photon de scintillation par le deuxième photodétecteur 14.

Dans une étape 115, les moyens d'identification 15 identifient la séquence constituée de la réception du signal de détection provenant du premier photodétecteur 11 à l'étape 105 et de la réception du signal de détection provenant du deuxième photodétecteur 14 à l'étape 110 à un évènement de coïncidence. Chaque évènement de coïncidence est associé à un temps de détection mesuré par le chronomètre 17.

Dans une étape 120, les moyens de comptage 32 incrémentent le compteur traduisant le nombre d'événements de coïncidence détectés. A cet effet, ils incrémentent par exemple d'une unité la colonne de l'histogramme représentant le nombre d'événements de coïncidence en fonction du temps de détection correspondant au temps de détection mesuré à l'étape 110.

A l'issue de l'étape 110, c'est-à-dire dès que les moyens d'identification ont reçu un signal de détection d'un photon provenant du deuxième photodétecteur 14, ils sont prêts à recevoir à nouveau une séquence constituée d'un signal de détection provenant du premier photodétecteur 11, et d'un signal de détection provenant du deuxième photodétecteur 14 de manière à identifier un évènement de coïncidence suivant.

Le dispositif de détermination 1 détecte ainsi une pluralité n d'évènements de coïncidence successifs pendant le temps prédéterminé d'irradiation du scintillateur 5 par le rayonnement ionisant. Chaque évènement de coïncidence engendre l'incrémentation du compteur par les moyens de comptage 32.

Dans une étape 125, les moyens de comptage 32 comptent le nombre d'évènements de coïncidence détectés pendant le temps prédéterminé d'irradiation du scintillateur 5. A l'issue du temps prédéterminé d'irradiation, le compteur indique le nombre total d'évènements de coïncidence détectés. Par exemple, le contenu de chaque colonne de l'histogramme correspond au nombre d'évènements de coïncidence associés à un même temps de détection mesuré. Ainsi les moyens de comptage 32 ajoutent par exemple le nombre d'évènements de coïncidence de toutes les colonnes de l'histogramme pour obtenir un nombre total d'évènements de coïncidence détectés pendant le temps prédéterminé d'irradiation.

Dans une étape 130, les moyens de calcul 35 obtiennent la dose d'irradiation déposée dans le scintillateur 5 pendant le temps prédéterminé d'irradiation en fonction du nombre total d'évènements de coïncidence et du facteur de proportionnalité prédéterminé. A cet effet, selon le premier mode de réalisation, les moyens de calcul 35 multiplient le nombre total d'évènements de coïncidence comptés par les moyens de comptage 32 pendant le temps prédéterminé d'irradiation par le facteur de proportionnalité prédéterminé. Ils obtiennent ainsi la dose d'irradiation déposée dans le scintillateur 5.

En option, les moyens de calcul 35 calculent, dans une étape 135, une valeur du débit de dose correspondant en divisant la dose d'irradiation calculée à l'étape 130 par le temps prédéterminé d'irradiation.

Le procédé de détermination de la dose d'irradiation déposée dans le scintillateur 5 est par exemple mis en oeuvre en agençant le scintillateur 5 à une profondeur donnée dans un objet. Selon un exemple de réalisation, le scintillateur est situé à l'extérieur du corps humain ou animal.

En variante, le procédé est mis en oeuvre en disposant le scintillateur 5 contre une surface extérieure d'un objet. Selon un exemple de réalisation, le scintillateur est situé à l'extérieur du corps humain ou animal.

L'invention a également pour objet un procédé de détermination d'une courbe C₁ donnant la dose déposée dans le scintillateur 5 en fonction de la distance d entre le scintillateur 5 et la source 2 de rayonnement ionisant. Ce procédé comprend la détermination de la dose déposée dans le scintillateur 5 à différentes distances d de la source 2 par mise en oeuvre, à chacune de ces distances d, du procédé de détermination de la dose déposée décrit ci-dessus en référence à la figure 2.

Plus précisément, on agence le scintillateur 5 à une distance d de la source 2. On met alors en oeuvre le procédé de détermination de la dose déposée tel que décrit ci-dessus. A l'issue de l'étape 130, on obtient la dose déposée à la distance d.

On répète ce procédé, toutes choses étant égales par ailleurs, en agençant le scintillateur 5 à différentes distances d de la source 2, et on obtient, pour chaque distance d, une valeur de la dose déposée dans le scintillateur 5 à cette distance d. On construit ensuite la courbe C₁ à partir de ces valeurs de la dose déposée.

Dans le cadre de ce procédé, seule la distance d à la source 2 varie entre chaque mise en oeuvre du procédé de détermination de la dose. En particulier, le temps d'irradiation prédéterminé et la source d'ionisation sont identiques pour chaque mise en oeuvre du procédé.

La distance d peut correspondre à une épaisseur d'air entre le scintillateur 5 et la source 2.

Selon des variantes, la distance d peut aussi correspondre à une profondeur dans un matériau d'intérêt. Dans ce cas, on intercale par exemple une épaisseur d de ce matériau d'intérêt, entre la source 2 et le scintillateur 5. La dose déposée déterminée à chaque mise en oeuvre du procédé de détermination avec une épaisseur d de matériau entre la source 2 et le scintillateur 5 correspond alors à la dose déposée à une profondeur d de ce matériau ou d'un matériau présentant une densité équivalente.

L'utilisation de PMMA (polyméthacrylate de méthyle) comme matériau d'intérêt est particulièrement avantageuse dans le domaine médical pour simuler la dose déposée à une profondeur donnée dans le corps humain. En effet, le PMMA présente une densité et une composition chimique proches de celles du corps humain et donc un comportement similaire sous irradiation par un rayonnement ionisant.

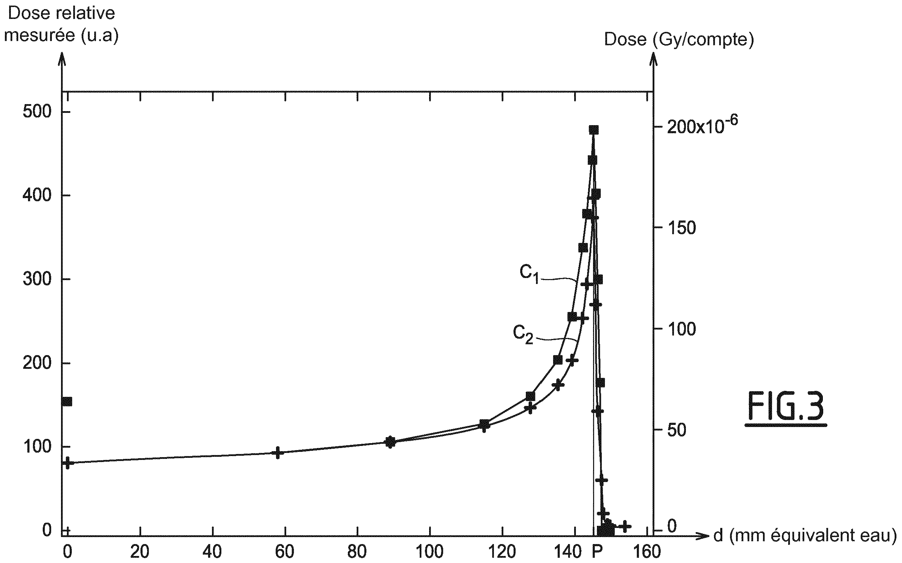

La figure 3 illustre un exemple de courbe C₁ obtenue par le procédé de détermination selon l'invention, ainsi qu'une courbe C₂ obtenue par le procédé classique de détermination de la dose déposée mettant en oeuvre une chambre d'ionisation. La comparaison des courbes C₁ et C₂ montre que le procédé de détermination de la dose déposée selon l'invention présente une sensibilité plus importante que le procédé classique à la profondeur du Pic de Bragg P où le dépôt d'énergie est le plus important et où les conséquences d'une mesure peu précise de la dose déposée peuvent être les plus dangereuses.

Le dispositif de détermination 1' de la dose déposée dans le scintillateur 5 selon un deuxième mode de réalisation va maintenant être décrit. Seules les différences entre le dispositif 1' selon le deuxième mode de réalisation et le dispositif 1 selon le premier mode de réalisation sont expliquées ci-dessous.

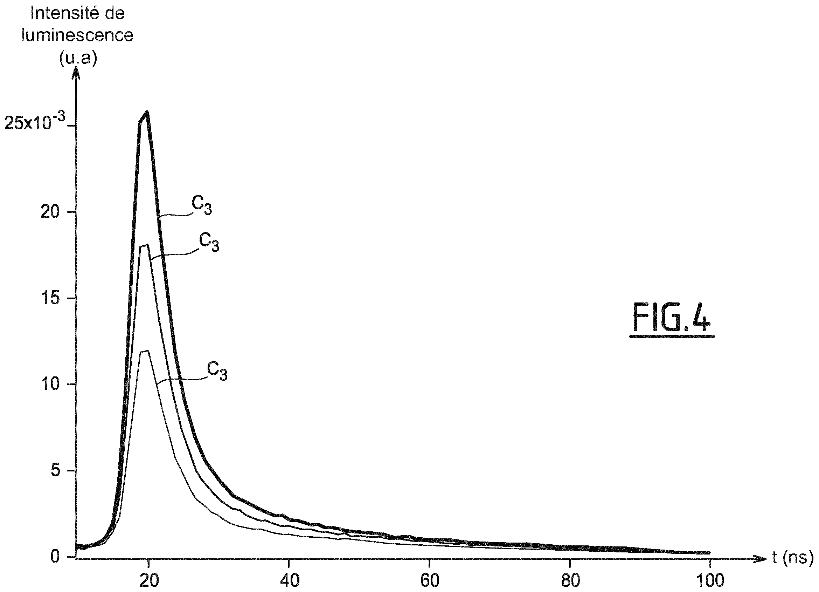

Les moyens de comptage 32' du dispositif de détermination 1' diffèrent des moyens de comptage 32 du dispositif de détermination 1 en ce qu'ils comprennent en outre des moyens de construction d'une courbe C₃ par lissage à partir de l'histogramme représentant le nombre d'évènements de coïncidence en fonction du temps de détection. Cette courbe C₃ représente le nombre d'évènements de coïncidence détectés en fonction du temps de détection. Elle présente la forme de la courbe de déclin de scintillation. La figure 4 illustre des exemples de courbes C₃ obtenues à différentes distances d de la source 2.

Les moyens de comptage 32' du dispositif de détermination 1' sont configurés pour obtenir le nombre total d'évènements de coïncidence identifiés pendant le temps prédéterminé d'irradiation en calculant l'intégrale de la courbe C₃.

Les moyens de calcul 35' du dispositif de détermination 1' sont configurés pour obtenir la dose d'irradiation déposée dans le scintillateur 5 sur la base de l'intégrale de la courbe C₃ et du facteur de proportionnalité prédéterminé. En particulier, les moyens de calcul 35' sont configurés pour calculer la dose d'irradiation par multiplication de l'intégrale de la courbe C₃ par le facteur de proportionnalité prédéterminé.

Le procédé de détermination de la dose déposée dans le scintillateur 5 selon un deuxième mode de réalisation met en oeuvre le dispositif de détermination 1' selon le deuxième mode de réalisation. Il ne diffère du procédé selon le premier mode de réalisation qu'en ce qu'au cours de l'étape 125, les moyens de comptage 32' construisent, à partir de l'histogramme, la courbe C₃ représentant le nombre d'évènements de coïncidence détectés en fonction du temps de détection. Les moyens de comptage 32' comptent ensuite le nombre total d'évènements de coïncidence identifiés en calculant l'intégrale de la courbe C₃.

Au cours de l'étape 130, les moyens de calcul 35' calculent la dose d'irradiation déposée dans le scintillateur 5 sur la base de l'intégrale de la courbe C₃ calculée par les moyens de comptage 32' à l'étape 125 et du facteur de proportionnalité prédéterminé. En particulier, les moyens de calcul 35' calculent la dose d'irradiation par multiplication de l'intégrale de la courbe C₃ par le facteur de proportionnalité prédéterminé.

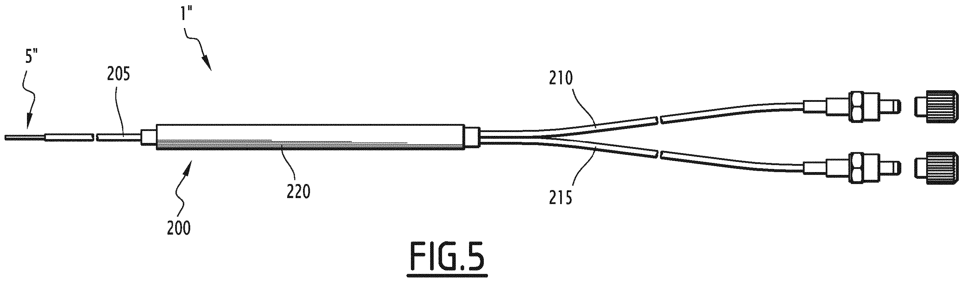

La figure 5 illustre une partie d'un dispositif 1" de détermination de la dose déposée dans le scintillateur 5 selon un troisième mode de réalisation. Les éléments identiques à ceux des premiers et deuxièmes modes de réalisation portent les mêmes références. Seules les différences par rapport aux premier et deuxième modes de réalisation sont expliquées par la suite.

Dans le troisième mode de réalisation, le scintillateur 5" se présente sous la forme d'une fibre optique scintillante. Celle-ci se présente sous la forme d'une fibre optique scintillante multimode. Elle présente un diamètre inférieur à 200µm. Sa longueur est comprise entre 500µm et plusieurs centimètres.

Le scintillateur 5" est agencé à l'extrémité d'un ensemble de fibres optiques 200 propre à transférer au moins une partie des photons de scintillation émis par le scintillateur 5" au cours d'un évènement d'excitation jusqu'au dispositif d'acquisition 7, plus particulièrement jusqu'aux premier et deuxième photodétecteurs 11, 14.

Plus particulièrement, l'ensemble 200 comprend une fibre optique principale 205 non scintillante, à l'une des extrémités de laquelle est agencé le scintillateur 5". A son extrémité opposée au scintillateur 5", la fibre optique principale 205 se divise en deux fibres optiques secondaires 210 et 215. Les fibres optiques secondaires 210 et 215 connectent respectivement la fibre optique principale 205 au premier photodétecteur 11 et au deuxième photodétecteur 14.

Selon un premier exemple, les fibres optiques secondaires 210 et 215 et la fibre optique principale 205 présentent sensiblement le même diamètre. En particulier, il s'agit de fibres optiques de même type. Ce sont par exemple des fibres de type HCP1000. Les fibres optiques secondaires 210 et 215 sont couplées à la fibre optique principale 205 au moyen d'un coupleur 220 adapté.

Le diamètre du scintillateur 5", c'est-à-dire de la fibre optique scintillante, est sensiblement égal au diamètre de la fibre optique principale 205.

Le scintillateur 5" est entouré d'une gaine réalisée dans un matériau transparent aux rayonnements ionisants, mais opaque à la lumière. Ainsi la gaine est propre à laisser passer les rayonnements ionisants jusqu'au scintillateur 5". En revanche, les photons de scintillation émis par le scintillateur 5" ne passent pas à travers la gaine. En outre, la lumière provenant du milieu extérieur au scintillateur 5" ne peut entrer dans la gaine. La gaine assure que les photons de scintillations transférés vers le premier et le deuxième photodétecteur 11, 14 proviennent uniquement de l'interaction entre le rayonnement ionisant et le scintillateur 5".

Selon un autre exemple, les fibres optiques secondaires 210 et 215 présentent des diamètres très différents. En particulier, la fibre optique secondaire 215 placée en direction du deuxième photodétecteur 14 présente une section inférieure de 95 % à la section de la fibre optique secondaire 210 placée en direction du premier photodétecteur 11. Dans ce cas, le premier photodétecteur 11 et le deuxième photodétecteur 14 présentent des ouvertures d'entrée des photons identiques, correspondant en particulier à la pleine ouverture optique de leurs fenêtres d'entrée. Les premier et deuxième photodétecteurs 11, 14 sont non diaphragmés. Cette variante induit des coûts de réalisation réduits du fait de la suppression du diaphragme.

Le procédé de détermination de la dose déposée mettant en oeuvre le dispositif de détermination 1" selon le troisième mode de réalisation est identique aux procédés selon le premier et le deuxième mode de réalisation.

Dans une variante, le scintillateur est introduit directement dans le corps humain ou animal, avant la mise en oeuvre du procédé selon l'invention. Cette introduction est réalisée par exemple à l'aide du dispositif 1" en introduisant la fibre optique au moyen d'un cathéter. Le procédé selon l'invention est ensuite mis en oeuvre sans étape invasive dans l'organisme une fois l'implantation du scintillateur 5" effectuée.

Le dispositif de détermination de la dose selon le premier, le deuxième et le troisième mode de réalisation est particulièrement avantageux.

En premier lieu, dans chacun de ces modes de réalisation, le scintillateur, qui est la partie du dispositif destinée à être irradiée, est très compact, et notamment bien plus compact qu'une chambre d'ionisation. En effet, le scintillateur présente par exemple un volume sensible d'environ 0,1mm³, alors que les chambres d'ionisation les plus petites mesurent au moins 1mm de côté. Le dispositif selon l'invention présente donc l'avantage de permettre la mesure de la dose déposée dans des lieux exigus, ce qui n'est pas le cas de la chambre d'ionisation. Cette caractéristique est particulièrement intéressante dans les domaines médicaux de l'imagerie et de la radiothérapie.

En outre, le scintillateur peut être placé au sein d'un objet d'intérêt, ce qui permet notamment de suivre la dose déposée en temps réel directement dans l'objet d'intérêt. En outre, le dispositif et le procédé associé de détermination de la dose selon l'invention permettent d'obtenir une grande sensibilité de mesure même pour de très faibles doses déposées dans le scintillateur, allant jusqu'à quelques nGray.min¹ pour des volumes de scintillateurs de l'ordre du mm³. Cette sensibilité provient notamment de l'utilisation de la technique de comptage de photons uniques corrélés en temps, c'est-à-dire de la détection d'évènements de coïncidence à l'aide de deux photodétecteurs. En effet, l'utilisation de cette technique permet de ne détecter que des évènements résultant effectivement d'une interaction entre le scintillateur et le rayonnement ionisant. De ce fait, le nombre total d'évènements détectés est directement proportionnel à la dose déposée dans le matériau scintillant. Il n'est donc pas nécessaire de faire appel à des facteurs de correction déterminés empiriquement et dépendant d'une multiplicité de facteurs.

La sensibilité accrue provient également du fait que la mesure d'une lumière, à savoir la lumière émise sous rayonnement, est une méthode plus sensible intrinsèquement que la mesure des charges émises sous l'effet d'un rayonnement (chambre d'ionisation). En effet, on estime la quantité d'énergie pour produire un photon visible dans un scintillateur organique à une dizaine d'eV alors que le fait de produire une paire ion-électrons, collectable par un dispositif de mesure est estimé à quelques centaines d'eV.

En outre, la sensibilité de détection est également augmentée par rapport à une méthode utilisant une chambre d'ionisation du fait que l'ionisation est bien plus importante dans un solide que dans un gaz.

De plus, un photodétecteur est capable de détecter des quantités de lumière très faibles, tandis qu'il n'est pas possible de mesurer de très faibles quantités de courant dans le cas d'une chambre d'ionisation.

Le dispositif selon l'invention est également avantageux d'un point de vue économique, notamment grâce au faible coût de fabrication d'un scintillateur.

Le fonctionnement du deuxième photodétecteur en régime de photo électron unique (comptage d'un photon unique) assure un éclairement constant de ce deuxième photodétecteur et donc un fonctionnement à faible bruit et exempt de saturation.

La mesure en coïncidence, par son principe, élimine tous les événements non corrélés, tels les bruits intrinsèques aux appareils de détection et de mesure, mais également tous les événements liés à la présence de parasitages extérieurs (environnement radioactif, bruits électromagnétiques liés aux appareillages médicaux, aux accélérateurs et réacteurs, par exemple) qui pourraient affecter la justesse de la mesure.

Le dispositif selon l'invention permet, dans le cadre de la mesure de la dose ou du débit de dose par scintillation, d'éliminer les événements non corrélés et de discriminer les rayonnements ionisants par mesure de déclins de scintillation par coïncidence, notamment dans le cas de la scintillation liquide.

Selon une variante, la source 2 est un générateur de rayons X non médical, par exemple d'un appareil de contrôle industriel non destructif.

Selon une variante, la source 2 est propre à émettre un rayonnement ionisant avec un angle solide quelconque.

Selon une variante, le scintillateur est par exemple un scintillateur organique tel que le para-terphényle ou l'anthracène.

Selon une variante, le premier et le deuxième photodétecteur 11, 14 sont des détecteurs à diodes du type CMOS.

Selon une variante du troisième mode de réalisation, le scintillateur 5" est une fibre optique scintillante multimode ayant un diamètre supérieur ou égal à 100µm. Sa longueur est par exemple comprise entre 500 µm et plusieurs mètres.

On notera que les courbes C₁ et C₃ représentées respectivement sur les figures 3 et 4 ont été obtenues en mettant en oeuvre le procédé de détermination selon l'invention avec une source 2 émettant un rayonnement alpha. Le rayonnement alpha utilisé lors de cette expérience était issu d'un accélérateur synchrotron accéléré à 150MeV/u. La distance d en abscisse sur la figure 3 correspond à l'épaisseur de PMMA traversée par le rayonnement.

La courbe C₂ de la figure 3 résulte d'une mesure classique réalisée dans les mêmes conditions avec une chambre d'ionisation.

La comparaison des courbes C₁ et C₂ de la figure 3 confirme que le procédé de détermination selon l'invention permet d'obtenir la dose d'irradiation déposée par un rayonnement alpha avec une plus grande sensibilité de mesure qu'un procédé classique utilisant une chambre d'ionisation de référence.

Par ailleurs, on constate que les courbes C₃ de la figure 4 reproduisent chacune la forme de la courbe classique de déclin de scintillation. La bonne reproduction de la forme de cette courbe de déclin confirme la meilleure efficacité du procédé de détection selon l'invention pour la mesure de la dose déposée par un rayonnement alpha par rapport à un procédé utilisant un photomultiplicateur unique.

Les inventeurs ont également utilisé le procédé selon l'invention avec une source 2 émettant un rayonnement gamma. Le rayonnement gamma utilisé lors de cette expérience était issu d'une source au Cobalt 60 de raies caractéristiques à 1,17 MeV et 1,33 MeV et d'activité 1,85 TBq.

Le scintillateur était un morceau de fibre optique scintillante BCF-12 commercialisée par Saint-Gobain de 1 mm de diamètre et de 1 cm de long.

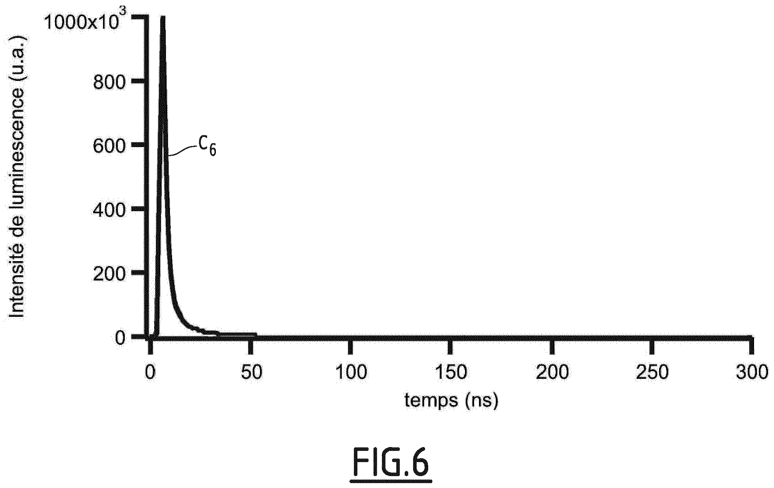

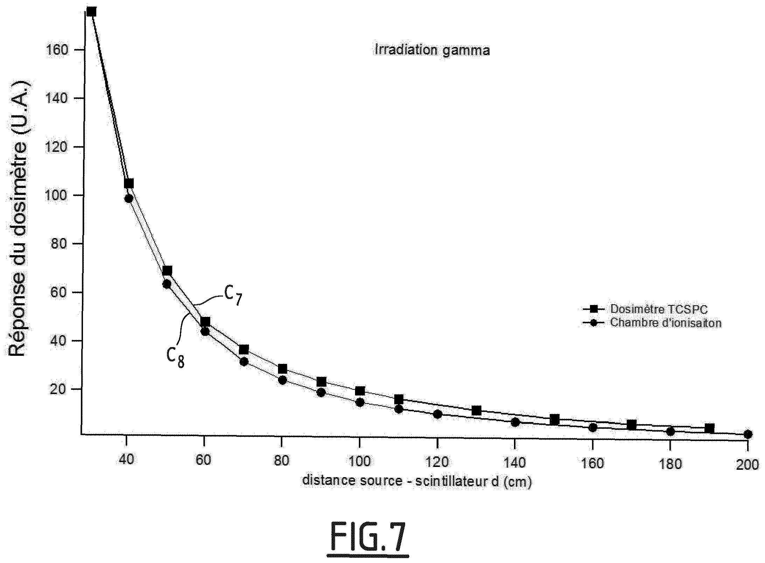

Cette expérience a permis d'obtenir les courbes de déclin de scintillation C₆ et C₇ représentées sur les figures 6 et 7.

La courbe C₆ est analogue aux courbes C₃ de la figure 4. Comme dans le cas de la figure 4, on constate que la courbe C₆ reproduit la forme de la courbe de déclin de scintillation sans saturation dans les premières 20 nanosecondes du déclin, ce qui confirme la meilleure efficacité du procédé de détection selon l'invention pour la mesure de la dose déposée par un rayonnement gamma, par rapport à un procédé utilisant un photomultiplicateur unique, qui ne permet pas une telle reproduction.

La courbe C₇ de la figure 7 représente la dose d'irradiation déterminée par le procédé selon l'invention en fonction de la distance d à la source d'irradiation. La courbe C₈ de la figure 7 est une courbe analogue obtenue avec une chambre d'ionisation.

Les inventeurs ont également utilisé le procédé selon l'invention avec une source 2 émettant un rayonnement X.

Le scintillateur était un morceau de fibre optique scintillante BCF-12 commercialisée par Saint-Gobain de 1 mm de diamètre et de 1 cm de long.

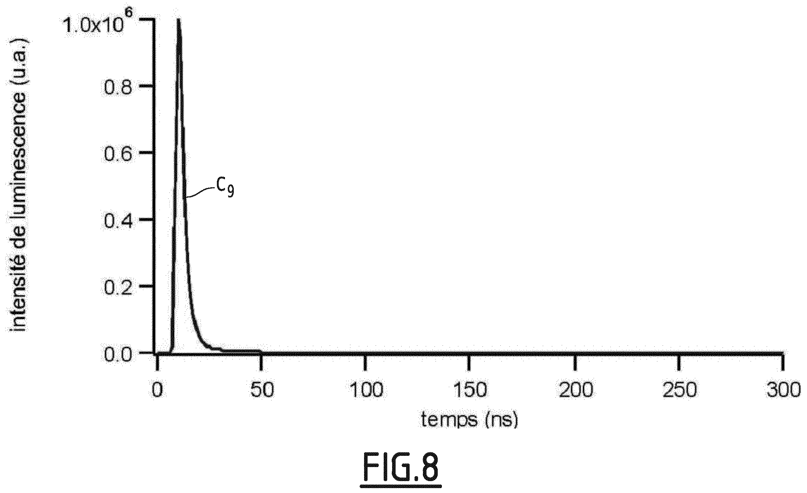

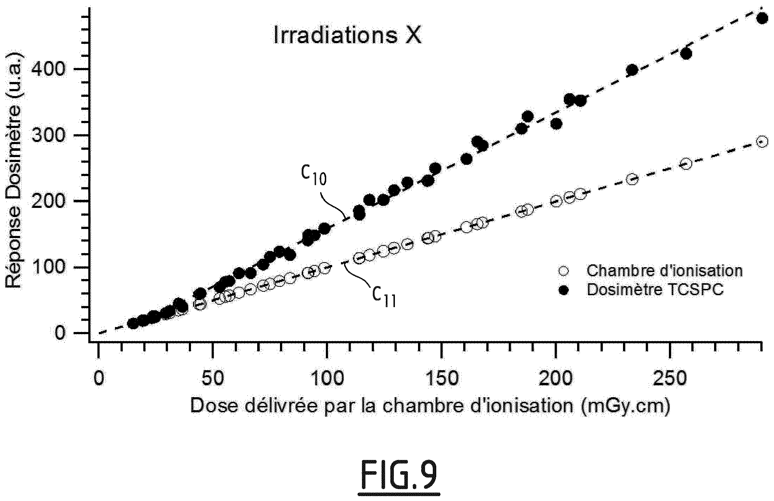

Les courbes C₉ et C₁₀ représentées respectivement sur les figures 8 et 9 ont été obtenues lors de cette expérience.

La courbe C₉ est analogue à la courbe C₆ illustrée sur la figure 6. On constate qu'elle reproduit également la forme de la courbe de déclin de scintillation, ce qui confirme la meilleure efficacité du procédé de détection selon l'invention pour la mesure de la dose déposée par un rayonnement X par rapport à un procédé classique utilisant un photomultiplicateur unique.

En outre, la dose d'irradiation déterminée par ce procédé a été comparée à la dose mesurée par une chambre d'ionisation. Les résultats de cette comparaison sont illustrés sur la figure 9, sur laquelle les courbes C₁₀ et C₁₁ représentent respectivement la dose d'irradiation mesurée au moyen du procédé de détermination de la dose selon l'invention et la réponse de la chambre d'ionisation en fonction de la dose délivrée par la chambre d'ionisation en mGy.cm.

On constate que la pente de la courbe C₁₀ est supérieure à celle de la courbe C₁₁ ce qui confirme la meilleure efficacité et dynamique du procédé de détermination selon l'invention, déjà constatée sur la figure 8, par rapport à un procédé utilisant une chambre d'ionisation

En outre, on constate sur la figure 9 que le dispositif de détermination de la dose selon l'invention présente une résolution en débit de dose très supérieure, de l'ordre de 70%, à celle d'une chambre d'ionisation standard. En effet, la différence entre les pentes des droites C₁₀ et C₁₁ de la figure 9 est environ égale à 70%.

Enfin, ces expériences ont permis de confirmer que la résolution temporelle, dans la mesure du débit de dose traversant le scintillateur, du dispositif de détermination de la dose selon l'invention selon l'invention est très bonne, puisqu'elle est inférieure à 0,1 secondes.

Selon une variante du dispositif de détermination selon le premier mode de réalisation, le deuxième photodétecteur 14 ne fonctionne pas en régime de comptage de photon unique. Dans ce cas, les premier et deuxième photodétecteurs 11, 14 présentent par exemple des ouvertures physiques de mêmes dimensions. En particulier, ni le premier, ni le deuxième photodétecteur 11, 14 ne sont diaphragmés.

Le procédé de détermination selon cette variante est analogue au procédé selon le premier mode de réalisation, la seule différence étant que le deuxième photodétecteur 14 ne fonctionne pas en régime de comptage de photon unique.

Selon une variante du dispositif de détermination selon le troisième mode de réalisation, le deuxième photodétecteur 14 ne fonctionne pas en régime de comptage de photon unique. Les premier et deuxième photodétecteurs 11, 14 présentent par exemple des ouvertures physiques de mêmes dimensions et les fibres optiques secondaires 210 et 215 présentent des diamètres sensiblement identiques.

Le procédé de détermination selon cette variante est analogue au procédé selon le troisième mode de réalisation, la seule différence étant que le deuxième photodétecteur 14 ne fonctionne pas en régime de comptage de photon unique.

Selon une variante du dispositif 1', 1" de détermination de la dose d'irradiation selon le deuxième et le troisième mode de réalisation tel que décrits ci-dessus, les moyens de calcul 35', 35" sont en outre configurés pour déterminer une dose d'ionisation déposée dans le scintillateur 5', 5" par le rayonnement ionisant lorsque le scintillateur 5', 5" est irradié pendant le temps prédéterminé d'irradiation.

A cet effet, les moyens de calcul 35', 35" sont configurés pour :
- calculer l'intégrale de la courbe représentant le nombre d'évènements de coïncidence détectés en fonction du temps de détection, entre un temps de détection Δt égal à n x τ et un temps de détection maximal, pour obtenir un nombre total d'évènements de coïncidence d'ionisation ; et pour
- déterminer la dose d'ionisation déposée dans le scintillateur 5', 5" en multipliant ce nombre total d'évènements de coïncidence d'ionisation par un deuxième facteur de proportionnalité prédéterminé.

τ est la durée de vie de fluorescence du scintillateur 5', 5". La durée de vie de fluorescence τ est une caractéristique intrinsèque du scintillateur 5', 5". Sa valeur est par exemple fournie par le producteur du scintillateur 5', 5".

n est une constante choisie de telle sorte que sur l'intervalle de temps de détection compris entre n x τ et le temps de détection maximal, on somme uniquement les évènements de coïncidence résultant des processus d'ionisation du scintillateur 5', 5".

La constante n est notamment comprise entre 1 et 10. Elle est avantageusement environ égale à 1.

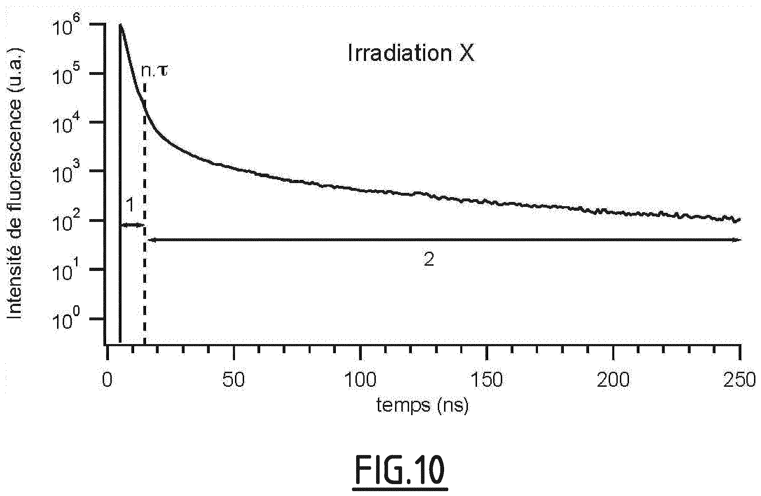

Le temps de détection n x τ a été illustré sur la figure 10 sous la forme d'une ligne verticale. Cette ligne verticale sépare les évènements de coïncidence résultant des processus d'excitation (à gauche sur la figure 10) des évènements de coïncidence résultant des processus d'ionisation (à droite sur la figure 10).

Le temps de détection maximal correspond à la valeur la plus élevée de temps de détection pour laquelle au moins un évènement de coïncidence a été détecté pendant le temps prédéterminé d'irradiation.

Le deuxième facteur de proportionnalité prédéterminé est différent du facteur de proportionnalité prédéterminé tel que décrit précédemment.

Comme le facteur de proportionnalité prédéterminé décrit précédemment, le deuxième facteur de proportionnalité prédéterminé est par exemple enregistré dans une mémoire du dispositif d'analyse 8'.

En particulier, le deuxième facteur de proportionnalité dépend uniquement des caractéristiques du dispositif d'acquisition 7, du dispositif d'analyse 8 et du scintillateur 5',5", c'est-à-dire des caractéristiques de la chaîne d'acquisition. Il est indépendant de la distance du scintillateur 5', 5" à la source 2', 2".

Le deuxième facteur de proportionnalité est, par exemple, prédéterminé en irradiant le scintillateur 5', 5" au moyen d'une source de rayonnement ionisant 2',2" en :
- mesurant la dose d'irradiation déposée dans le scintillateur 5', 5" au moyen d'un dosimètre de référence, par exemple une chambre d'ionisation, et en
- déterminant le nombre total d'évènements de coïncidence d'ionisation détectés dans les mêmes conditions à l'aide du dispositif de détermination de la dose selon la variante du deuxième ou troisième mode de réalisation de l'invention.

Le rapport entre la dose d'irradiation mesurée au moyen du dispositif de référence et le nombre total d'évènements de coïncidence d'ionisation déterminé correspond au deuxième facteur de proportionnalité prédéterminé.

Ce deuxième facteur de proportionnalité est inférieur au premier facteur de proportionnalité.

En particulier, la dose d'irradiation déterminée par le procédé selon le premier, deuxième ou troisième mode de réalisation décrit ci-dessus est égale à la dose d'ionisation.

Selon cette variante, les moyens de calcul 35', 35" sont, en option, configurés pour déterminer en outre une dose d'excitation déposée dans le scintillateur 5', 5" par le rayonnement, en particulier ionisant, lorsque le scintillateur 5', 5" est irradié pendant le temps prédéterminé d'irradiation.

A cet effet, les moyens de calcul 35' sont configurés pour :
- calculer l'intégrale de la courbe représentant le nombre d'évènements de coïncidence détectés en fonction du temps de détection, entre un temps de détection minimal et un temps de détection Δt égal à n x τ pour obtenir un nombre total d'évènements de coïncidence d'excitation ; et pour
- déterminer la dose d'excitation déposée dans le scintillateur 5', 5" en multipliant le nombre total d'évènements de coïncidence d'excitation par un troisième facteur de proportionnalité prédéterminé.

Le temps de détection minimal correspond à la valeur la plus faible de temps de détection pour laquelle au moins un évènement de coïncidence a été détecté pendant le temps prédéterminé d'irradiation.

τ est la durée de vie de fluorescence du scintillateur 5', 5".

On notera que la constante n est telle que lorsque l'on intègre la courbe sur l'intervalle de temps de détection compris entre le temps de détection minimal et le temps de détection Δt égal à n x τ, on somme uniquement les évènements de coïncidence résultant des excitations du scintillateur 5', 5" par le rayonnement ionisant.

Le troisième facteur de proportionnalité prédéterminé est différent des facteurs de proportionnalité prédéterminés décrits précédemment. Comme les autres facteurs de proportionnalité prédéterminés décrits précédemment, le troisième facteur de proportionnalité prédéterminé est par exemple enregistré dans une mémoire du dispositif d'analyse 8', 8".

En particulier, il dépend uniquement des caractéristiques du dispositif d'acquisition 7', 7" du dispositif d'analyse 8', 8" et du scintillateur 5',5" c'est-à-dire des caractéristiques de la chaîne d'acquisition. Il est indépendant de la distance du scintillateur 5',5".

En particulier, le troisième facteur de proportionnalité prédéterminé est déterminé par étalonnage. Cet étalonnage est par exemple réalisé en mesurant la dose déposée dans le scintillateur 5', 5" au moyen d'un dosimètre de référence et en considérant que la somme des ionisations et des excitations correspond à la dose d'irradiation totale déposée dans le scintillateur. La dose d'irradiation totale ainsi calculée est supérieure à la dose mesurée avec le dosimètre de référence. Le troisième facteur de proportionnalité prédéterminé correspond par exemple au rapport entre la dose d'ionisation et le nombre d'évènements de coïncidence d'ionisation tels que déterminés précédemment.

Le procédé de détermination de la dose d'irradiation déposée dans le scintillateur selon une variante du deuxième ou troisième mode de réalisation comprend une étape de détermination de la dose d'ionisation déposée dans le scintillateur 5', 5".

Cette étape comprend les sous-étapes de :
- calculer l'intégrale de la courbe représentant le nombre d'évènements de coïncidence détectés en fonction du temps de détection, entre le temps de détection égal à n x τ et le temps de détection maximal, pour obtenir le nombre total d'évènements de coïncidence d'ionisation ; et
- déterminer la dose d'ionisation déposée dans le scintillateur 5', 5" en multipliant le nombre total d'évènements de coïncidence d'ionisation par le deuxième facteur de proportionnalité prédéterminé.

En option, le procédé selon cette variante comprend en outre une étape de détermination de la dose d'excitation déposée dans le scintillateur 5', 5", laquelle étape comprend les sous-étapes de :
- calculer l'intégrale de la courbe représentant le nombre d'évènements de coïncidence détectés en fonction du temps de détection, entre le temps de détection minimal et le temps de détection Δt égal à n x τ pour obtenir le nombre total d'évènements de coïncidence d'excitation ; et
- déterminer la dose d'excitation déposée dans le scintillateur 5' en multipliant le nombre total d'évènements de coïncidence d'excitation par le troisième facteur de proportionnalité prédéterminé.

L'étape de détermination de la dose d'ionisation déposée dans le scintillateur 5', 5" et/ou l'étape de détermination de la dose d'excitation déposée dans le scintillateur 5', 5" peuvent également être mises en oeuvre indépendamment du procédé de détermination de la dose d'irradiation déposée dans le scintillateur 5', 5" tel que défini précédemment, en mettant en oeuvre uniquement les étapes de ce procédé consistant à :
- irradier le scintillateur 5', 5" au moyen du rayonnement ionisant pendant un temps prédéterminé, chaque interaction entre le rayonnement ionisant et le scintillateur 5', 5" excitant le scintillateur 5', 5" et engendrant l'émission de photons de scintillation ; et
- détecter les évènements de coïncidence et obtenir une courbe des évènements de coïncidence en fonction du temps de détection,
puis en mettant en oeuvre l'étape de détermination de la dose d'ionisation et/ou l'étape de détermination de la dose d'excitation, sans déterminer la dose d'irradiation déposée dans le scintillateur 5', 5".

## Revendications

1. Procédé de détermination d'une dose d'irradiation déposée dans un scintillateur (5) par un rayonnement ionisant, comprenant l'étape de :
- irradier (100) le scintillateur (5) au moyen du rayonnement ionisant pendant un temps prédéterminé, chaque interaction entre le rayonnement ionisant et le scintillateur (5) excitant le scintillateur (5) et engendrant l'émission de photons de scintillation ;
**caractérisé en ce qu'**il comprend en outre les étapes de :
- détecter (105) un instant d'excitation du scintillateur (5) correspondant à un événement d'excitation par le rayonnement ionisant avec deux contributions : une excitation directe du scintillateur et une ionisation du scintillateur, à l'aide d'un premier photodétecteur (11) ; puis
- détecter (110) un instant de réception d'un photon de scintillation émis par le scintillateur (5) à l'aide d'un deuxième photodétecteur (14), distinct du premier photodétecteur (11) ;
- identifier (115) chaque séquence constituée par une détection d'un instant d'excitation par le premier photodétecteur (11), suivie par une détection d'un instant de réception par le deuxième photodétecteur (14) à un évènement de coïncidence ;
- compter (120, 125) le nombre d'évènements de coïncidence détectés pendant le temps prédéterminé d'irradiation ; et
- obtenir (130) la dose d'irradiation déposée dans le scintillateur (5) pendant le temps prédéterminé d'irradiation en fonction du nombre d'évènements de coïncidence comptés et d'un facteur de proportionnalité prédéterminé,
le deuxième photodétecteur (14) fonctionnant en régime de comptage de photon unique lors de l'étape de détection de l'instant de réception d'un photon de scintillation par le deuxième photodétecteur (14).

2. Procédé de détermination selon la revendication 1, dans lequel le deuxième photodétecteur (14) présente une ouverture physique de réception de photons d'aire inférieure à une ouverture physique de réception de photons du premier photodétecteur (11).

3. Procédé de détermination selon la revendication 1 ou 2, comprenant les étapes de :
- chronométrer le temps de détection entre l'instant d'excitation détecté par le premier photodétecteur (11) et l'instant de réception d'un photon de scintillation par le deuxième photodétecteur (14) pour chaque évènement de coïncidence ;
- construire une courbe du nombre d'évènements de coïncidence en fonction du temps de détection ;
- calculer la dose sur la base d'une intégration d'au moins une partie de la courbe et d'un facteur de proportionnalité prédéterminé.

4. Procédé de détermination selon l'une quelconque des revendications précédentes, dans lequel le facteur de proportionnalité prédéterminé est indépendant du nombre d'évènements de coïncidence détectés.

5. Procédé de détermination selon l'une quelconque des revendications précédentes, comprenant une étape de transmission d'au moins une partie de la lumière issue du scintillateur (5) vers le premier photodétecteur (11) et le deuxième photodétecteur (14) au moyen d'une fibre optique (200).

6. Procédé de détermination selon l'une quelconque des revendications précédentes, dans lequel le premier photodétecteur (11) et le deuxième photodétecteur (14) sont choisis parmi un tube photomultiplicateur, un photomultiplicateur à galette de microcanaux et un capteur à diodes.

7. Procédé de détermination selon l'une quelconque des revendications précédentes, dans lequel l'instant d'excitation détecté à l'aide du premier photodétecteur (11) correspond à l'instant de détection par le premier photodétecteur (11) d'un premier photon de scintillation émis par le scintillateur (5).

8. Procédé de détermination selon l'une quelconque des revendications précédentes, dans lequel le photon de scintillation détecté par le deuxième photodétecteur (14) est émis par le scintillateur (5) lors de l'événement d'excitation correspondant à l'instant d'excitation détecté par le premier photodétecteur (11).

9. Procédé de détermination d'une courbe donnant la dose absorbée par un scintillateur en fonction de la distance entre le scintillateur (5) et une source de rayonnement (2), avantageusement ionisant, comprenant la détermination de la dose déposée à différentes distances de la source (2) par mise en oeuvre, à chacune de ces distances, du procédé de détermination de la dose déposée selon l'une quelconque des revendications 1 à 8.

10. Dispositif de détermination de la dose d'irradiation déposée dans un scintillateur (5) par un rayonnementionisant, émis par une source, comprenant :
- un scintillateur (5) configuré pour être irradié par le rayonnement ionisant et propre à émettre des photons de scintillation à chaque interaction avec le rayonnement ionisant ;
**caractérisé en ce qu'**il comprend en outre :
- un premier photodétecteur (11), configuré pour détecter un instant d'excitation du scintillateur avec deux contributions : une excitation directe du scintillateur et une ionisation du scintillateur, et un deuxième photodétecteur (14), distinct du premier photodétecteur (11), configuré pour détecter un instant de réception d'un photon de scintillation émis par le scintillateur (5),
- des moyens d'identification (15), configurés pour identifier chaque séquence constituée par une détection d'un instant d'excitation par le premier photodétecteur (11), suivie par une détection d'un instant de réception d'un photon de scintillation par le deuxième photodétecteur (14) à un évènement de coïncidence ;
- des moyens de comptage (32), configurés pour compter le nombre d'évènements de coïncidence détectés pendant le temps prédéterminé d'irradiation ; et
- des moyens de calcul (35), configurés pour obtenir la dose d'irradiation déposée dans le scintillateur (5) pendant le temps prédéterminé d'irradiation en fonction du nombre d'évènements de coïncidence et d'un facteur de proportionnalité prédéterminé,
le deuxième photodétecteur (14) étant configuré pour fonctionner en régime de comptage de photon unique.

11. Dispositif de détermination selon la revendication 10, dans lequel le scintillateur (5) est solidaire d'au moins une fibre optique (200), laquelle est propre à transmettre les photons de scintillation issus du scintillateur (5) vers le premier photodétecteur (11) et le deuxième photodétecteur (14).

12. Dispositif de détermination selon l'une des revendications 10 et 11, dans lequel :
- les moyens d'identification (15) sont en outre configurés pour chronométrer le temps de détection entre l'instant d'excitation détecté par le premier photodétecteur (11) et l'instant de réception d'un photon de scintillation par le deuxième photodétecteur (14) pour chaque évènement de coïncidence ; et
- les moyens de calcul (35) sont en outre configurés pour construire une courbe du nombre d'évènements de coïncidence en fonction du temps de détection.

13. Dispositif de détermination selon la revendication 12, **caractérisé en ce que** les moyens de calcul (35' ; 35") sont en outre configurés pour :
- calculer l'intégrale de la courbe du nombre d'évènements de coïncidence détectés en fonction du temps de détection, entre un temps de détection égal à n x τ, où n est une constante comprise entre 1 et 10 et τ est une durée de vie de fluorescence du scintillateur (5' ; 5"), et un temps de détection maximal, pour obtenir un nombre total d'évènements de coïncidence d'ionisation ; et
- déterminer la dose d'ionisation déposée dans le scintillateur (5', 5") en multipliant le nombre total d'évènements de coïncidence d'ionisation par un deuxième facteur de proportionnalité prédéterminé.

14. Dispositif de détermination selon l'une des revendications 12 et 13, **caractérisé en ce que** les moyens de calcul (35' ; 35") sont en outre configurés pour :
- calculer l'intégrale de la courbe du nombre d'évènements de coïncidence détectés en fonction du temps de détection, entre un temps de détection minimal et un temps de détection Δτ égal à n x τ, pour obtenir un nombre total d'évènements de coïncidence d'excitation ; et pour
- déterminer une dose d'excitation déposée dans le scintillateur (5' ; 5") en multipliant le nombre total d'évènements de coïncidence d'excitation par un troisième facteur de proportionnalité prédéterminé.

15. Procédé de détermination selon l'une quelconque des revendications 1 à 9, prise en combinaison avec la revendication 3, comprenant en outre une étape de détermination d'une dose d'ionisation déposée dans le scintillateur (5' ;5") comprenant les sous-étapes de :
- calculer l'intégrale de la courbe du nombre d'évènements de coïncidence détectés en fonction du temps de détection, entre un temps de détection égal à n x τ, où n est une constante comprise entre 1 et 10 et τ est une durée de vie de fluorescence du scintillateur (5' ; 5"), et un temps de détection maximal, pour obtenir un nombre total d'évènements de coïncidence d'ionisation ; et
- déterminer la dose d'ionisation déposée dans le scintillateur (5', 5") en multipliant le nombre total d'évènements de coïncidence d'ionisation par un deuxième facteur de proportionnalité prédéterminé.

16. Procédé de détermination selon l'une quelconque des revendications 1 à 9, prise en combinaison avec la revendication 3, ou selon la revendication 15, comprenant en outre une étape de détermination d'une dose d'excitation déposée dans le scintillateur (5', 5") comprenant les sous-étapes de :
- calculer l'intégrale de la courbe du nombre d'évènements de coïncidence détectés en fonction du temps de détection, entre un temps de détection minimal et un temps de détection égal à n x τ, pour obtenir un nombre total d'évènements de coïncidence d'excitation ; et
- déterminer une dose d'excitation déposée dans le scintillateur (5' ; 5") en multipliant le nombre total d'évènements de coïncidence d'excitation par un troisième facteur de proportionnalité prédéterminé.

## Patentansprüche

1. Verfahren zur Bestimmung einer in einem Szintillator (5) durch ionisierende Strahlung aufgebrachten Bestrahlungsdosis, welches folgende Schritte umfasst:
- die Bestrahlung (100) des Szintillators (5) mittels ionisierender Strahlung während einer vorgegebenen Dauer, wobei jede Wechselwirkung zwischen der ionisierender Bestrahlung und dem Szintillator (5) den Szintillator (5) erregt und die Emission von Szintillationsphotonen auslöst; **dadurch gekennzeichnet, dass** es des Weiteren die folgenden Schritte umfasst:
- die Erfassung (105) eines Erregungsmoments des Szintillators (5), welches einem Erregungsereignis durch die ionisierende Strahlung mit zwei Beiträgen entspricht: einer direkten Erregung des Szintillator und einer Ionisierung des Szintillator mithilfe eines ersten Photodetektors (11); dann
- die Erfassung (110) eines Empfangsmoments eines Szintillationsphotons, welches vom Szintillator (5) mithilfe eines zweiten Photodetektors (14) emittiert wird, und vom ersten Photodetektor (11) abweicht;
- die Identifikation (115) jeder Sequenz, die durch eine Erfassung eines Erregungsmoments durch den ersten Photodetektor (11) gebildet wird, gefolgt von einer Erfassung eines Empfangsmoments durch den zweiten Photodetektor (14) bei einem Koinzidenzereignis;
- das Zählen (120 ,125) der Anzahl der während der vorgegebenen Bestrahlungsdauer erfassten Koinzidenzereignisse; und
- das Erhalten (130) der Bestrahlungsdosis, die in der vorgegebenen Bestrahlungsdauer im Hinblick auf die gezählten Koinzidenzereignisse und einen vorgegebenen Proportionalitätsfaktor im Szintillator (5) aufgebracht wurde,
- wobei der zweite Photodetektor (14) während der Erfassung des Empfangsmoments eines Szintillationsphotons durch den zweiten Photodetektor (14) in Einzelphotonenzählbetrieb funktioniert.

2. Bestimmungsverfahren nach Anspruch 1, in welchen der zweite Photodetektor (14) eine materielle Photonenempfangsöffnung aufweist, die kleiner ist als eine materielle Photonenempfangsöffnung des ersten Photodetektors (11).

3. Bestimmungsverfahren nach Anspruch 1 oder 2, welches folgende Schritte umfasst:
- die Zeitmessung der Erfassungsdauer zwischen dem Zeitpunkt der durch den ersten Photodetektor (11) erfassten Erregung und dem Zeitpunkt des Empfangs eines Szintillationsphotons durch den zweiten Photodetektor (14) bei jedem Koinzidenzereignis;
- das Erstellen einer Kurve für die Anzahl der Koinzidenzereignisse entsprechend der Erfassungsdauer;
- die Berechnung der Dosis auf Grundlage einer Einbeziehung von mindestens einem Teil der Kurve und einem vorgegebenen Proportionalitätsfaktor.

4. Bestimmungsverfahren nach einem der vorhergehenden Ansprüche, in welchen der vorgegebene Proportionalitätsfaktor unabhängig von der Anzahl der erfassten Koinzidenzereignisse ist.

5. Bestimmungsverfahren nach einem der vorhergehenden Ansprüche, welches einen Schritt der Übertragung von mindestens einem Teil des vom Szintillator (5) kommenden Lichts zum ersten Photodetektor (11) und zum zweiten Photodetektor (14) über eine optische Faser (200) umfasst.

6. Bestimmungsverfahren nach einem der vorhergehenden Ansprüche, in welchem der erste Photodetektor (11) und der zweite Photodetektor (14) ausgewählt werden aus einer Fotovervielfacherröhre, einem Fotovervielfacher mit Mikrokanalscheibe und einem Diodensensor.

7. Bestimmungsverfahren nach einem der vorhergehenden Ansprüche, in welchen der mithilfe des ersten Photodetektors (11) erfasste Erregungsmoment dem Moment entspricht, in dem der erste Photodetektor (11) ein erstes vom Szintillator (5) emittiertes Szintillationsphoton erfasst.

8. Bestimmungsverfahren nach einem der vorhergehenden Ansprüche, in welchen das vom zweiten Photodetektor (14) erfasste Szintillationsphoton vom Szintillator (5) während des Erregungsereignisses emittiert wird, welches dem vom ersten Photodetektor (11) erfassten Erregungsmoment entspricht.

9. Verfahren zur Bestimmung einer Kurve, welche die von einem Szintillator absorbierte Dosis in Hinblick auf die Entfernung zwischen dem Szintillator (5) und einer Strahlungsquelle (2), vorzugsweise ionisierend, angibt, welches die Bestimmung der Dosis umfasst, die in unterschiedlichen Entfernungen zur Quelle (2) durch Anwendung in jeder dieser Entfernungen des Verfahrens zur Bestimmung der aufgebrachten Dosis nach einem der Ansprüche 1 bis 8 aufgebracht wird.

10. Vorrichtung zur Bestimmung der Bestrahlungsdosis, die in einem Szintillator (5) über eine von einer Quelle emittierten ionisierenden Strahlung aufgebracht wird, die folgendes umfasst:
- einen Szintillator (5), der so ausgebildet ist, dass er mit ionisierender Strahlung bestrahlt werden kann und in der Lage ist, Szintillationsphotonen bei jeder Wechselwirkung mit ionisierender Strahlung zu emittieren:
**dadurch gekennzeichnet, dass** sie des Weiteren folgendes umfasst:
- einen ersten Photodetektor (11), der so ausgebildet ist, dass er einen Erregungsmoment des Szintillators mit zwei Beiträgen, einer direkten Erregung des Szintillators und einer Ionisierung des Szintillators, erfassen kann, und ein zweiter Photodetektor (14), der sich vom ersten Photodetektor (11) unterscheidet und so ausgebildet ist, dass er einen Empfangsmoment eines vom Szintillator (5) emittierten Szintillationsphotons erfassen kann,
- Identifikationsmittel (15) zur Identifizierung jeder Sequenz, die durch eine Erfassung eines Erregungsmoments durch den ersten Photodetektor (11) gebildet wird, gefolgt von einer Erfassung eines Empfangsmoments eines Szintillationsphotons durch den zweiten Photodetektor (14) bei einem Koinzidenzereignis;
- Zählmittel (32) zum Zählen der Anzahl der während der vorgegebenen Bestrahlungsdauer erfassten Koinzidenzereignisse; und
- Rechenmittel (35) zum Erhalten der im Szintillator (5) während der vorgegebenen Bestrahlungsdauer im Hinblick auf die Anzahl der Koinzidenzereignisse und einen vorgegebenen Proportionalitätsfaktor aufgebrachten Bestrahlungsdosis, wobei der zweite Photodetektor (14) so ausgebildet ist, dass er in Einzelphotonenzählbetrieb funktioniert.

11. Bestimmungsvorrichtung nach Anspruch 10, in welchem der Szintillator (5) mit zumindest einer optischen Faser (200) verbunden ist, welche in der Lage ist, die vom Szintillator (5) kommenden Szintillationsphotonen an den ersten Photodetektor (11) und an den zweiten Photodetektor (14) zu übertragen.

12. Bestimmungsvorrichtung nach einem der Ansprüche 10 und 11, in welcher:
- die Identifikationsmittel (15) des Weiteren so ausgebildet sind, dass sie die Erfassungsdauer zwischen dem vom ersten Photodetektor (11) erfassten Erregungsmoment und dem vom zweiten Photodetektor (14) erfassten Empfangsmoment eines Szintillationsphotons bei jedem Koinzidenzereignis messen kann; und
- die Rechenmittel (35) des Weiteren so ausgebildet sind, dass sie eine Kurve für die Anzahl der Koinzidenzereignisse im Hinblick auf die Erfassungsdauer erstellen können.

13. Bestimmungsvorrichtung nach Anspruch 12, **dadurch gekennzeichnet, dass** die Rechenmittel (35'; 35") des Weiteren so ausgebildet sind, dass sie:
- das Integral der Kurve für die Anzahl der erfassten Koinzidenzereignisse im Hinblick auf die Erfassungsdauer zwischen einer Erfassungsdauer gleich n x τ, wobei n eine Konstante zwischen 1 und 10, und τ eine Fluoreszenzlebensdauer des Szintillator (5'; 5") ist, und einer maximalen Erfassungsdauer zum Erhalten einer Gesamtzahl von Ionisationskoinzidenzereignissen berechnet; und
- die im Szintillator (5', 5") aufgebrachte Ionisationsdosis durch Multiplikation der Gesamtzahl der Ionisationskoinzidenzereignisse mit einem zweiten vorgegebenen Proportionalitätsfaktor ermittelt.

14. Bestimmungsvorrichtung nach einem der Ansprüche 12 und 13, **dadurch gekennzeichnet, dass** die Rechenmittel (35'; 35") des Weiteren so ausgebildet sind, dass sie:
- das Integral der Kurve der erfassten Anzahl der Koinzidenzereignisse im Hinblick auf die Erfassungsdauer zwischen einer minimalen Erfassungsdauer und einer Erfassungsdauer Δτ X = n x τ berechnen, um eine Gesamtzahl an Erregungskoinzidenzereignissen zu erhalten; und um
- eine im Szintillator (5'; 5") aufgebrachte Erregungsdosis durch Multiplikation der Gesamtzahl der Erregungskoinzidenzereignisse mit einem dritten vorgegebenen Proportionalitätsfaktor zu ermitteln.

15. Bestimmungsverfahren nach einem der Ansprüche 1 bis 9 in Kombination mit Anspruch 3, welches des Weiteren einen Schritt der Bestimmung einer im Szintillator (5'; 5") aufgebrachten Ionisationsdosis umfasst, mit folgenden Teilschritten:
- der Berechnung des Integrals der Kurve für die Anzahl der Koinzidenzereignisse im Hinblick auf die Erfassungsdauer zwischen einer Erfassungsdauer gleich n x τ, wobei n eine Konstante zwischen 1 und 10 und τ eine Fluoreszenzlebensdauer des Szintillator (5'; 5") ist, und einer maximalen Erfassungsdauer zum Erhalten einer Gesamtzahl an Ionisationskoinzidenzereignissen; und
- der Bestimmung der im Szintillator (5', 5") aufgebrachten Ionisationsdosis durch Multiplikation der Gesamtzahl der Ionisationskoinzidenzereignisse mit einem zweiten vorgegebenen Proportionalitätsfaktor.

16. Bestimmungsverfahren nach einem der Ansprüche 1 bis 9 in Kombination mit Anspruch 3, oder nach Anspruch 15, welches des Weiteren einen Schritt der Bestimmung einer im Szintillator (5', 5") aufgebrachten Erregungsdosis umfasst, mit folgenden Teilschritten:
- der Berechnung des Integrals der Kurve für die Anzahl der erfassten Koinzidenzereignisse im Hinblick auf die Erfassungsdauer zwischen einer minimalen Erfassungsdauer und einer Erfassungsdauer gleich n x τ, um eine Gesamtzahl an Erregungskoinzidenzereignissen zu erhalten; und
- die Bestimmung der im Szintillator (5', 5") aufgebrachten Erregungsdosis durch Multiplikation der Gesamtzahl der Erregungskoinzidenzereignisse mit einem dritten vorgegebenen Verhältnisfaktor.

## Claims

1. A method for determining an irradiation dose deposited in a scintillator (5) by ionizing radiation, said method comprising the steps of:
- irradiating (100) the scintillator (5) with the ionizing radiation for a predetermined time, with each interaction between the ionizing radiation and the scintillator (5) exciting the scintillator (5) and causing the emission of scintillation photons;
**characterized in that** it further comprises the following steps:
- detecting (105) an instant at which the scintillator (5) is excited, which corresponds to an excitation event by the ionizing radiation with two contributions: one direct excitation of the scintillator and one ionization of the scintillator, using a first photodetector (11); then
- detecting (110) an instant at which a scintillation photon emitted by the scintillator (5) is received, using a second photodetector (14), different from the first photodetector (11);
- identifying (115) each sequence consisting of the detection of an excitation instant by the first photodetector (11), followed by the detection of a reception instant by the second photodetector (14) at a coincidence event;
- counting (120, 125) the number of coincidence events detected during the predetermined irradiation time; and
- obtaining (130) the irradiation dose deposited in the scintillator (5) during the predetermined irradiation time as a function of the number of counted coincidence events and a pre-determined proportionality factor,
- with the second photodetector (14) operating in a single photon counting mode during the step of detecting the scintillation photon reception instant by the second photodetector (14).

2. A determination method according to claim 1, wherein the second photodetector (14) has a physical opening for receiving photons with an area smaller than a physical opening of the first photodetector (11) for receiving photons.

3. A determination method according to claim 1 or 2, comprising the steps of:
- measuring the instant of detection between the excitation instant detected by the first photodetector (11) and the scintillation photon reception instant by the second photodetector (14) for each coincidence event;
- building a curve of the number of coincidence events according to the detection time;
- calculating the dose on the basis of an integration of at least a portion of the curve and a predetermined proportionality factor.

4. A determination method according to any one of the preceding claims, wherein the predetermined proportionality factor is independent of the number of detected coincidence events.

5. A determination method according to any one of the preceding claims, comprising a step of transmitting at least a portion of the light originating from the scintillator (5) to the first photodetector (11) and the second photodetector (14) by means of an optical fiber (200).

6. A determination method according to any one of the preceding claims, wherein the first photodetector (11) and the second photodetector (14) are selected from a photomultiplier tube, a micro-channel plate photomultiplier and a diode sensor.

7. A determination method according to any one of the preceding claims, wherein the excitation instant detected using the first photodetector (11) corresponds to the instant of detection by the first photodetector (11) of a first scintillation photon emitted by the scintillator (5).

8. A determination method according to any one of the preceding claims, wherein the scintillation photon detected by the second photodetector (14) is emitted by the scintillator (5) upon the excitation event corresponding to the excitation instant detected by the first photodetector (11).

9. A method for determining a curve giving the dose absorbed by a scintillator according to the distance between the scintillator (5) and a source of an advantageously ionizing radiation (2), comprising determining the dose deposited at various distances from the source (2) by implementing, for each of these distances, the method for determining the dose deposited according to any one of claims 1 to 8.

10. A device for determining the irradiation dose deposited in a scintillator (5) by an ionizing radiation emitted by a source, comprising:
- a scintillator (5) so configured as to be irradiated by the ionizing radiation and adapted to emit scintillation photons upon each interaction with the ionizing radiation;
**characterized in that** it further comprises:
- a first photodetector (11) so configured as to detect an instant at which the scintillator is excited, with two contributions: one direct excitation of the scintillator and one ionization of the scintillator, and a second photodetector (14), different from the first photodetector (11) so configured as to detect an instant at which a scintillation photon emitted by the scintillator (5) is received;
- identifying means (15) so configured as to identify each sequence consisting of a detection of an excitation instant by the first photodetector (11), followed by a detection of an instant at which a photon scintillation is received by the second photodetector (14) at a coincidence event;
- counting means (32) configured for counting the number of coincidence events detected during the predetermined irradiation time; and
- calculating means (35) so configured as to obtain the irradiation dose deposited in the scintillator (5) during the predetermined irradiation time according to the number of coincidence events and a predetermined proportionality factor,
with the second photodetector (14) being so configured as to operate in single photon counting mode.

11. A determining device according to claim 10, wherein the scintillator (5) is integral with at least one optical fiber (200) which is adapted to transmit the scintillation photons originating from the scintillator (5) to the first photodetector (11) and the second photodetector (14).

12. A determining device according to one of claims 10 and 11, wherein:
- the identifying means (15) are further so configured as to measure the detection time between the excitation instant detected by the first photodetector (11) and the instant at which a scintillation photon is received by the second photodetector (14) for each coincidence event; and
- the calculating means (35) are further so configured as to build a curve of the number of coincidence events according to the detection time.

13. A determining device according to claim 12, **characterized in that** the calculating means (35'; 35") are further so configured as to:
- calculate the integral of the curve of the number of coincidence events detected based on the detection time between a detection time equal to nxτ, where n is a constant between 1 and 10 and τ is a lifetime of fluorescence of the scintillator (5'; 5") and a maximum detection time, to obtain a total number of ionization coincidence events; and
- determine the ionization dose deposited in the scintillator (5', 5") by multiplying the total number of ionization coincidence events by a second predetermined proportionality factor.

14. A determining device according to one of claims 12 and 13, **characterized in that** the calculating means (35'; 35") is further so configured as to:
- calculate the integral of the curve of the number of coincidence events detected based on the detection time between a minimum detection time and a detection time Δτ equal to nxτ, to obtain a total number of excitation coincidence events; and to
- determine an excitation dose deposited in the scintillator (5'; 5") by multiplying the total number of excitation coincidence events by a third predetermined proportionality factor.

15. A determination method according to any one of claims 1 to 9, taken in combination with claim 3, further comprising a step of determining an ionization dose deposited in the scintillator (5'; 5") comprising the sub-steps of:
- calculating the integral of the curve of the number of coincidence events detected based on the detection time between a detection time equal to nxτ, where n is a constant between 1 and 10 and τ is a lifetime of fluorescence of the scintillator (5'; 5") and a maximum detection time to obtain a total number of ionization coincidence events; and
- determining the ionization dose deposited in the scintillator (5', 5") by multiplying the total number of ionization coincidence events by a second predetermined proportionality factor.

16. A determination method according to any one of claims 1 to 9, taken in combination with claim 3, or according to claim 15, further comprising a step of determining an excitation dose deposited in the scintillator (5', 5") comprising the sub-steps of:
- calculating the integral of the curve of the number of coincidence events detected based on the detection time between a minimum detection time and a detection time equal to nxτ, to obtain a total number of excitation coincidence events; and
- determining an excitation dose deposited in the scintillator (5'; 5") by multiplying the total number of excitation coincidence events by a third predetermined proportionality factor.
